(19) Europäisches Patentamt
European Patent Office
Office européen des brevets

(11) **EP 3 284 260 B1**

(12) **FASCICULE DE BREVET EUROPEEN**

(45) Date de publication et mention de la délivrance du brevet:
**23.12.2020 Bulletin 2020/52**

(51) Int Cl.:
*H04N 21/234* *(2011.01)*    *H04N 21/222* *(2011.01)*
*H04N 21/858* *(2011.01)*    *H04N 21/236* *(2011.01)*
*H04L 29/06* *(2006.01)*     *H04H 20/10* *(2008.01)*
*H04H 20/67* *(2008.01)*

(21) Numéro de dépôt: **16719287.1**

(22) Date de dépôt: **14.04.2016**

(86) Numéro de dépôt international:
**PCT/EP2016/058230**

(87) Numéro de publication internationale:
**WO 2016/166214 (20.10.2016 Gazette 2016/42)**

(54) **PROCÉDÉ DE REMPLACEMENT D'UN CONTENU PRINCIPAL PAR AU MOINS UN CONTENU SECONDAIRE, ÉQUIPEMENT DE REMPLACEMENT DE CONTENUS ET PROGRAMME D'ORDINATEUR CORRESPONDANTS**

VERFAHREN ZUM ERSETZEN EINES HAUPTINHALTS DURCH MINDESTENS EINEN SEKUNDÄREN INHALT, ZUGEHÖRIGE INHALTSERSETZUNGSVORRICHTUNG UND COMPUTERPROGRAMM

METHOD FOR REPLACING A MAIN CONTENT WITH AT LEAST ONE SECONDARY CONTENT, CORRESPONDING CONTENT REPLACEMENT DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2015 FR 1553260**

(43) Date de publication de la demande:
**21.02.2018 Bulletin 2018/08**

(73) Titulaire: **Enensys Technologies**
**35510 Cesson-Sévigné (FR)**

(72) Inventeurs:
• **BARBOTIN, Yvan**
**35490 Vieux-Vy sur Couesnon (FR)**
• **POULAIN, Ludovic**
**35410 Domloup (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2010/005416    WO-A1-2012/116743**
**FR-A1- 2 902 591    FR-A1- 2 937 490**
**US-A1- 2010 014 594**

• **WEISS S M: "SWITCHING FACILITIES IN MPEG-2: NECESSARY BUT NOT SUFFICIENT", SMPTE - MOTION IMAGING JOURNAL, SOCIETY OF MOTION PICTURE AND TELEVISION ENGINEERS, WHITE PLAINS, NY, US, vol. 104, no. 12, 1 décembre 1995 (1995-12-01), pages 788-802, XP000543847, ISSN: 0036-1682**

**Description**

**1. Domaine de l'invention**

Le domaine de l'invention est celui de la diffusion d'informations, dans un réseau de diffusion comprenant un émetteur fixe et une pluralité de sites de diffusion.

Plus précisément, l'invention concerne la diffusion terrestre de services télévisuels.

Encore plus précisément, l'invention concerne le « basculement » ou « décrochage » de services télévisuels, permettant de remplacer un contenu principal (par exemple des services télévisuels nationaux de type TF1®, France 2®, etc) par au moins un contenu secondaire (par exemple un contenu local de type météo locale, journal local, publicité locale, etc), pour diffusion du contenu secondaire par un site de diffusion.

L'invention s'applique notamment aux réseaux de diffusion terrestre conformes aux normes DVB-T ou DVB-T2 (« Digital Video Broadcasting - Terrestrial » en anglais, pour «diffusion vidéo numérique terrestre») ou aux normes à venir.

En particulier, l'invention s'applique aux réseaux SFN (« Single Frequency Network » pour « réseau à fréquence unique »).

**2. Art antérieur**

Lors d'une diffusion numérique terrestre, l'ensemble des chaines associées à un multiplexe / une fréquence sont gérées de manière centralisée au niveau d'un équipement appelée communément tête de réseau (« head end »), afin de créer un signal unique pour tous les sites de diffusion (i.e. les émetteurs), encore appelé flux de transport. Le chemin de distribution utilisé entre la tête de réseau et les sites de diffusion est généralement une liaison satellite, mais peut être aussi une liaison de type IP ou « micro ondes ».

Dans le cadre d'une diffusion numérique terrestre, la technologie SFN est notamment utilisée pour améliorer la couverture du territoire / d'une zone géographique et palier à des zones d'ombre liées à des éléments perturbateurs dans la transmission (montagne, collines, vallées, grands immeubles, ...). Elle permet également de réduire le nombre de fréquences utilisées, et par conséquent de libérer certaines plages de fréquences.

Cette technologie SFN, très efficace, implique une synchronisation parfaite des sites de diffusion entre eux, et une structure strictement identique du contenu à diffuser par les différents sites de diffusion.

La norme la plus utilisée actuellement pour diffuser la télévision numérique terrestre est la norme DVB-T. Cette norme est indépendante du format du contenu ; par exemple elle permet de diffuser des services « normaux » tout aussi bien que des services Haute Définition.

Une seconde version de la norme DVB-T, notée DVB-T2, offre encore plus d'efficacité en terme de diffusion, de couverture, de capacité de transport (débit) et de flexibilité.

La problématique du décrochage est bien connue dans le domaine de la diffusion de télévision numérique terrestre, encore appelée TNT, mettant par exemple en œuvre ces normes DVB-T ou DVB-T2.

En télévision numérique, le décrochage permet de substituer à un contenu principal, comme un programme télévisé de couverture nationale sur France 3®, un contenu secondaire, comme un programme télévisé de couverture régionale sur France 3. On passe ainsi d'une diffusion par une tête de réseau nationale, diffusant le contenu principal, à un site de diffusion régional, diffusant le contenu secondaire.

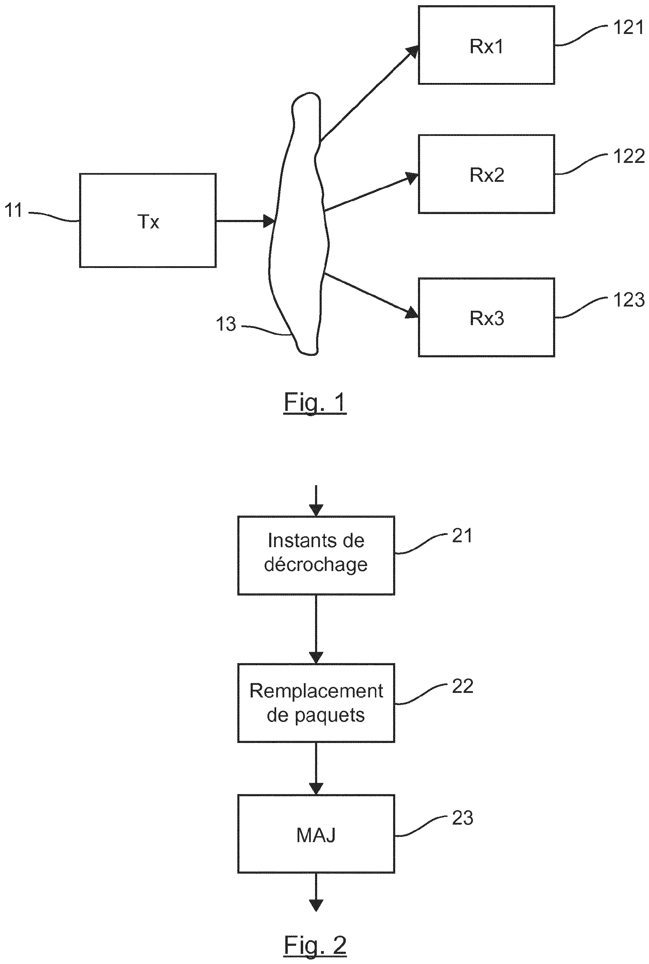

La figure 1 illustre un exemple de réseau de diffusion numérique terrestre, comprenant une tête de réseau Tx 11 alimentant un ou plusieurs sites de diffusion Rx1 121, Rx2 122, Rx3 123, implantés sur des sites géographiques distincts. Chaque site de diffusion Rx1 121, Rx2 122, Rx3 123 comprend un récepteur et un réémetteur, qui peuvent éventuellement être combinés. On entend donc ici par « site de diffusion » un équipement ou système comprenant un récepteur suivi par un réémetteur ou intégré dans un réémetteur.

Classiquement, la tête de réseau Tx 11 génère un signal numérique, encore appelé flux de transport, véhiculé jusqu'aux sites de diffusion Rx1 121, Rx2 122, Rx3 123 par l'intermédiaire d'un réseau de distribution 13, par exemple un réseau de distribution par satellite. Un tel signal est par exemple de type MPEG2-TS (en anglais « Motion Picture Expert Group 2 - Transport Stream ») ou T2-MI (en anglais « T2-Modulator Interface ») encapsulant une pluralité de flux MPEG2-TS, et porte le contenu principal.

L'un (ou plusieurs) des sites de diffusion Rx1 121, Rx2 122, Rx3 123, peut alors « décrocher », en remplaçant le contenu principal par un contenu secondaire dans le flux de transport, puis diffuser le flux de transport ainsi modifié vers des terminaux récepteurs.

Une telle technique de décrochage est notamment décrite dans la norme ANSI/SCTE 35.

Le document US2010/014594A1 décrit une technique de remplacement de contenus dans un flux de transport MPEG-2.

## 3. Exposé de l'invention

L'invention propose une nouvelle solution pour la mise en œuvre d'un tel décrochage, sous la forme d'un procédé de remplacement d'un contenu principal par au moins un contenu secondaire, le contenu principal étant porté par un flux de transport issu d'un émetteur fixe et destiné à une pluralité de sites de diffusion, dit flux d'origine.

L'invention propose ainsi une nouvelle solution pour le « basculement » ou « décrochage » de services télévisuels, permettant de remplacer un contenu principal par au moins un contenu secondaire.

On entend ici par contenu principal ou contenu secondaire un contenu audiovisuel, comprenant une composante vidéo et au moins une composante d'un autre type, par exemple une ou plusieurs composantes audio et/ou une ou plusieurs composantes de sous-titre. Chaque composante est transmise dans le flux de transport sous la forme de paquets multiplexés. Les paquets vidéo (respectivement audio et/ou de sous-titre) du contenu principal décrivent donc la composante vidéo (respectivement audio et/ou de sous-titre) du contenu principal, et les paquets vidéo (respectivement audio et/ou de sous-titre) du ou des contenus secondaires décrivent donc la ou les composantes vidéo (respectivement audio et/ou de sous-titre) du ou des contenus secondaires.

En particulier, l'invention propose une nouvelle technique de remplacement de contenus, permettant de mettre à jour de façon astucieuse différents champs du flux de transport (horloge de référence, compteurs de continuité, informations temporelles de reconstruction, etc) de façon à assurer un comportement déterministe de l'équipement de remplacement de contenus.

La solution proposée modifie donc uniquement la couche transport et ne modifie pas la couche de flux élémentaires (« Elementary streams »), contrairement aux solutions actuellement proposées. De plus, elle ne nécessite pas la modification du flux de transport au niveau de la tête de réseau.

En particulier, la solution proposée permet de générer de façon déterministe un flux modifié, identique au flux d'origine en terme de structure et de nombre de paquets, mais dont le contenu est modifié. Une telle technique de remplacement de contenus selon l'invention procure de nombreux avantages.

Selon au moins un mode de réalisation, une telle technique de remplacement de contenus permet d'éviter la duplication des contenus / service télévisuels lors de la diffusion de la tête de réseau vers les sites de diffusion, et donc une optimisation des liens de distribution. En particulier, l'invention permet d'éviter d'avoir autant de réseau de distribution que de régions / plaques SFN et est indépendante des chemins de distribution entre la tête de réseau et les sites de diffusion (satellite, IP, ...).

Comme la technique de remplacement de contenus est mise en œuvre au niveau d'un équipement de remplacement de contenus associé à au moins un site de diffusion, elle offre une flexibilité dans l'architecture du réseau, avec la possibilité de gérer des contenus locaux dans différents sites de diffusion non liés entre eux.

Selon au moins un mode de réalisation, la technique de remplacement de contenus proposée garantit une diffusion SFN. Les différents sites de diffusion (stations de ré-émission) d'une région (i.e. cellule SFN) peuvent ainsi émettre exactement un signal synchronisé en fréquence et surtout en temps, avec une précision de l'ordre de 1 à 10 $\mu$s.

En particulier, on note que si le contenu principal comprend plusieurs composantes audio (et/ou de sous-titre), un instant de décrochage audio (et/ou de sous-titre) distinct peut-être associé à chaque composante audio (et/ou de sous-titre).

Selon un premier mode de réalisation, l'invention permet un décrochage immédiat du contenu principal vers un contenu secondaire, dès qu'un moment adéquat pour basculer est détecté.

Selon un deuxième mode de réalisation, l'invention permet un décrochage différé du contenu principal vers un contenu secondaire, à un instant prédéfini.

Quelque soit le mode de réalisation choisi (décrochage immédiat ou différé), la première image insérée est choisie pour être une image de référence, et elle remplace une image de référence. En particulier, si le contenu à insérer ne commence pas par une image de référence, un prétraitement peut être mis en œuvre afin que la première image insérée soit une image de référence. Le basculement du contenu principal vers le contenu secondaire se produit donc sans perturbation pour l'utilisateur.

Selon au moins un mode de réalisation l'invention, les valeurs des différents champs du flux modifié (horloge de référence, compteurs de continuité, informations temporelles de reconstruction, etc) sont mises à jour de façon déterministe, ce qui permet un fonctionnement SFN du réseau de diffusion.

On note que, classiquement, l'horloge de référence est portée par la composante vidéo. Elle peut donc être mise à jour avec les informations temporelles de reconstruction vidéo selon l'invention. En variante, l'horloge de référence peut être portée par une autre composante, comme une composante audio ou une composante associée à un PID (« Packet Identifier ») particulier, et mise à jour avec les informations temporelles de reconstruction associées à cette composante.

Selon un mode de réalisation particulier de l'invention, le procédé de remplacement de contenus comprend également une étape de détermination d'un instant de retour vidéo et d'au moins un instant de retour audio ou de sous-titre, à partir d'un paquet de retour du flux modifié.

Un tel paquet de retour présente par exemple la même structure que le paquet de décrochage. Par exemple, de tels paquets sont de type SCTE-35.

Eventuellement, le paquet de retour est le même paquet que le paquet de décrochage, si celui-ci définit l'instant de retour vidéo et/ou audio et/ou de sous-titre, ou bien une durée de décrochage à partir de l'instant de décrochage vidéo et/ou audio et/ou de sous-titre.

Selon un premier mode de réalisation, l'invention permet un retour immédiat au contenu principal, dès qu'un moment adéquat pour basculer est détecté.

Selon un deuxième mode de réalisation, l'invention permet un retour différé au flux d'origine à un instant prédéfini.

Quelque soit le mode de réalisation choisi (retour immédiat ou différé), l'image de retour est choisie pour être une image de référence, afin d'améliorer la transition visuelle au moment du retour au flux d'origine.

Dans un mode particulier de réalisation, les différentes étapes du procédé de remplacement de contenus selon l'invention sont déterminées par des instructions de programmes d'ordinateurs.

En conséquence, l'invention vise aussi à protéger un programme d'ordinateur comportant des instructions adaptées à la mise en œuvre des étapes d'un procédé de remplacement de contenus tel que décrit ci-dessus lorsque ce programme est exécuté par un processeur, ainsi qu'un support d'informations lisible par un ordinateur comportant des instructions d'un programme d'ordinateur tel que mentionné ci-dessus.

L'invention concerne également un équipement de remplacement d'un contenu principal par au moins un contenu secondaire correspondant.

Un tel équipement est notamment adapté à mettre en œuvre le procédé de remplacement de contenus décrit précédemment.

Un tel équipement pourra bien sûr comporter les différentes caractéristiques relatives au procédé remplacement de contenus selon l'invention, qui peuvent être combinées ou prises isolément. Ainsi, les caractéristiques et avantages de cet équipement sont les mêmes que ceux du procédé de remplacement de contenus. Par conséquent, ils ne sont pas détaillés plus amplement.

En particulier, un tel équipement peut être localisé au niveau de chaque région/plaque SFN (plusieurs sites de diffusion appartenant à une même plaque de type SFN), ou bien au niveau de chaque site de diffusion. Il s'agit par exemple d'un équipement de type T2-Edge® commercialisé par le Demandeur.

Selon un mode de réalisation particulier de l'invention, le ou les contenus secondaires sont préalablement stockés dans l'équipement de remplacement de contenus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre un exemple de réseau de diffusion numérique terrestre selon l'art antérieur ;
- la figure 2 présente les principales étapes d'un procédé de remplacement de contenus selon un mode de réalisation particulier de l'invention ;
- les figures 3 et 4 illustrent deux exemples de réseaux de diffusion mettant en œuvre des équipements de remplacement de contenus selon un mode de réalisation particulier de l'invention ;

- les figures 5A à 5C représentent respectivement un exemple de flux d'origine, de flux modifié, et de retour au flux d'origine ;
- la figure 6 présente la structure simplifiée d'un équipement de remplacement de contenus selon un mode de réalisation particulier de l'invention.

## 5. Description d'un mode de réalisation de l'invention

### 5.1 Principe général

Le principe général de l'invention repose sur l'insertion déterministe, dans un flux de transport généré par une tête de réseau et destiné à une pluralités de sites de diffusion, de paquets vidéo (respectivement audio et/ou de sous-titre) d'au moins un contenu secondaire, en remplacement de paquets vidéo (respectivement audio et/ou de sous-titre) d'un contenu principal.

La solution proposée repose sur une mise à jour particulière de différents champs du flux de transport (horloge de référence, compteurs de continuité, informations temporelles de reconstruction, etc), permettant de modifier uniquement le flux de transport, et non les flux élémentaires de type vidéo, audio ou de sous-titre.

La figure 2 présente les principales étapes mises en œuvre par un équipement de remplacement de contenus selon un mode de réalisation de l'invention, pour le remplacement d'un contenu principal (par exemple un service audio-vidéo national à remplacer), par au moins un contenu secondaire (par exemple une ou plusieurs publicités locales).

On considère que le contenu principal est porté par un flux de transport issu d'un émetteur fixe et destiné à une pluralité de sites de diffusion, et que l'équipement de remplacement de contenus est localisé entre l'émetteur fixe et au moins un des sites de diffusion.

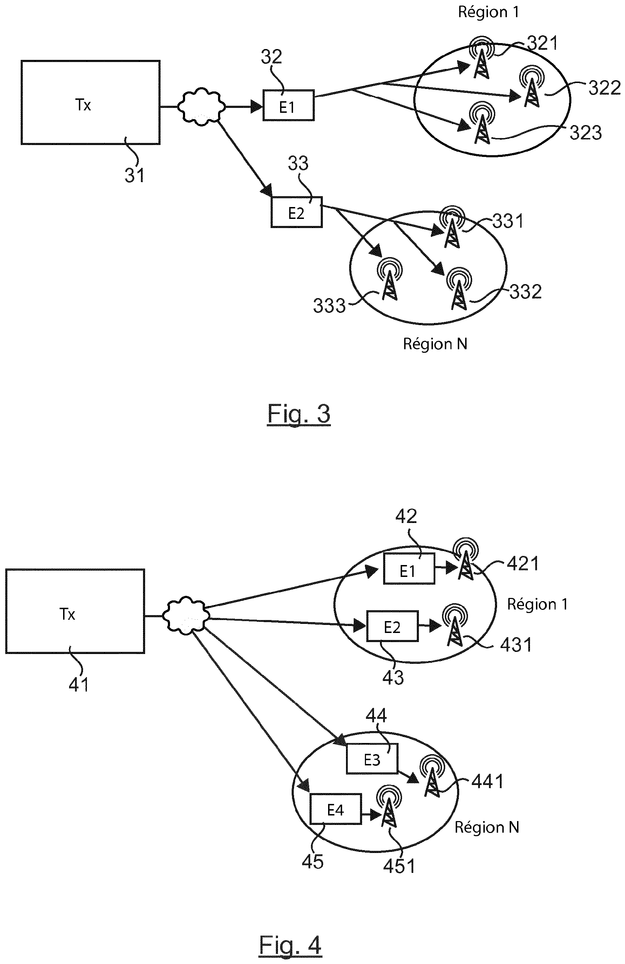

Selon un premier exemple, illustré en figure 3, l'équipement de remplacement de contenus peut être localisé au niveau de chaque région / plaque SFN.

Selon ce premier exemple, la tête de réseau 31 génère un ou plusieurs flux de transport, par exemple de type MPEG-TS ou T2-MI, et les diffuse aux équipements de remplacement 32 et 33, par l'intermédiaire d'un chemin de distribution. Chaque équipement de remplacement 32, 33 peut être connecté à un serveur de contenus ou à une base de données stockant les contenus secondaires à diffuser. L'équipement de remplacement 32 (respectivement 33) reçoit le ou les flux de transport d'origine, les modifie en y insérant ses propres contenus secondaires, et transmet le ou les flux modifiés à un ou plusieurs sites de diffusion 321, 322, 323 (respectivement 331, 332, 333).

Selon un deuxième exemple, illustré en figure 4, l'équipement de remplacement de contenus peut être localisé au niveau de chaque site de diffusion.

Selon ce deuxième exemple, la tête de réseau 41 génère un ou plusieurs flux de transport, par exemple de type MPEG-TS ou T2-MI, et le diffuse aux équipements de remplacement 42, 43, 44 et 45, par l'intermédiaire d'un chemin de distribution. Chaque équipement de remplacement 42, 43, 44 et 45 peut être connecté à un serveur de contenus ou à une base de données stockant les contenus secondaires à diffuser. Chaque équipement de remplacement (42, 43, 44, 45 respectivement) reçoit le ou les flux de transport d'origine, les modifie en y insérant ses propres contenus secondaires, et transmet le ou les flux modifiés au site de diffusion auquel il est associé (421, 431, 441, 451 respectivement). En particulier, l'équipement de remplacement peut être intégré au site de diffusion auquel il est associé.

En particulier, si l'on se place dans le contexte de la norme DVB-T2, selon laquelle plusieurs flux de transport, portés chacun par un PLP (« Physical Layer Pipe »), peuvent être multiplexés, la solution proposée peut être mise en œuvre pour chacun des flux de transport.

En revenant à la figure 2, l'équipement de remplacement selon un mode de réalisation de l'invention met en œuvre une étape 21 de détermination d'un instant de décrochage vidéo et d'au moins un instant de décrochage audio ou de sous-titre (un instant de décrochage par composante audio et/ou de sous-titre), à partir d'au moins un paquet de décrochage d'un flux d'origine.

Le flux de transport d'origine transporte en effet des informations indiquant l'instant de décrochage vers le contenu secondaire, encore appelé instant d'insertion du contenu secondaire, comprenant par exemple une ou plusieurs publicités. Comme indiqué précédemment, ces publicités peuvent être stockées dans l'équipement de remplacement. On considère par exemple que toutes les publicités commencent par une image de référence. De cette façon, le basculement du contenu principal vers le contenu secondaire n'est pas perçu par un utilisateur. Si le contenu à insérer ne commence pas par une image de référence, un prétraitement peut être mis en œuvre afin que la première image insérée soit une image de référence.

Une fois l'instant de décrochage vidéo déterminé, l'équipement de remplacement remplace (22) au moins un paquet vidéo du contenu principal du flux d'origine, dit paquet vidéo à remplacer, par au moins un paquet vidéo du contenu secondaire ou par un paquet nul, dit paquet vidéo de remplacement. De façon similaire, une fois l'instant de décrochage audio ou de sous-titre déterminé, l'équipement de remplacement remplace (22) au moins un paquet audio ou de sous-titre du contenu principal du flux d'origine, dit paquet audio ou de sous-titre à remplacer, par au moins un paquet audio ou de sous-titre du contenu secondaire ou par un paquet nul, dit paquet audio ou de sous-titre de remplacement.

On obtient ainsi un flux modifié, dans lequel on a inséré des paquets de remplacement. On note que le remplacement des paquets vidéo, et des paquets audio ou de sous-titre, est mis en œuvre séparément. En effet, l'audio, et par conséquent les éventuels sous-titres correspondants, est envoyé quelques centaines de millisecondes après la vidéo.

Au cours d'une troisième étape 23, on met à jour différents champs présents dans le flux modifié, et notamment une horloge de référence, un compteur de continuité de paquets vidéo, audio et/ou de sous-titre et au moins une information temporelle de reconstruction vidéo, audio et/ou de sous-titre.

On note que ces différentes étapes peuvent être effectuées successivement ou simultanément. En particulier, les étapes de remplacement 22 et mise à jour 23 peuvent être mises en œuvre simultanément.

*5.2 Exemple de mise en œuvre*

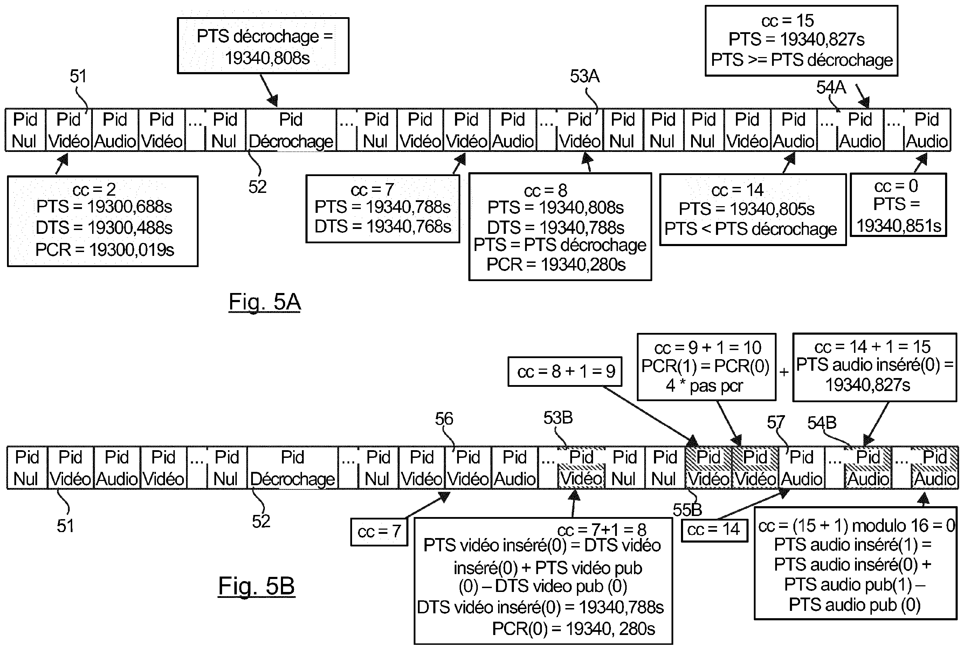

On décrit ci-après, en relation avec les figures 5A à 5C, un exemple de mise en œuvre de l'invention applicable à un flux de transport, pour le remplacement d'un service composé d'une composante vidéo et d'une composante audio. Il s'agit ici d'un exemple purement illustratif et non limitatif, un service pouvant notamment être composé d'une composante vidéo et de plusieurs composantes audio et/ou de sous-titre.

On se place également dans le contexte d'une norme de diffusion de type DVB ou DVB-T2, selon laquelle :

- l'horloge de référence est l'horloge PCR (« Program Clock reference »), i.e. une estampille temporelle exprimée en nombre de coups d'horloge 27Mhz, portée par un champ de 42 bits,
- l'information temporelle de reconstruction vidéo comprend une information temporelle de décodage vidéo de type DTS (« Decoding Time Stamp »), portée par un champ de 33 bits, et une information temporelle de présentation vidéo de type PTS (« Présentation Time Stamp »), portée par un champ de 33 bits,
- l'information temporelle de reconstruction audio comprend une information temporelle de présentation audio de type PTS, portée par un champ de 33 bits, et
- le compteur de continuité est de type CC vidéo ou CC audio (selon cet exemple, on considère uniquement une composante audio. On a donc *CC comp = CC audio*).

*5.2.1 Etape 1 : Recherche des instants de décrochage vidéo et audio*

On considère tout d'abord la figure 5A, illustrant le flux de transport d'origine (i.e. avant remplacement du contenu principal par au moins un contenu secondaire). De manière simplifiée, un tel flux d'origine comprend des paquets nuls, notés Pid Nul (« Packet Identifier »), des paquets vidéo, notés Pid Video, des paquets audio, notés Pid Audio.

A chaque paquet vidéo sont associés un compteur de continuité vidéo CC (allant de 0 à 15, et incrémenté à chaque paquet vidéo), une information temporelle de décodage vidéo de type DTS et une information temporelle de présentation vidéo de type PTS. A chaque paquet audio sont associés un compteur de continuité CC audio (allant de 0 à 15, et incrémenté à chaque paquet audio), et une information temporelle de présentation audio de type PTS.

Certains paquets, vidéo selon l'exemple considéré, portent une horloge de référence.

Ainsi, le paquet vidéo 51 est associé à un compteur de continuité égal à 2, un PTS vidéo égal à 19300,688s, un DTS vidéo égal à 19300,488s, et une horloge de référence PCR égale à 19300,019s.

Pour basculer d'un contenu principal vers au moins un contenu secondaire, on cherche tout d'abord à déterminer un instant de décrochage vidéo et un instant de décrochage audio. Ces informations sont encapsulées dans un paquet du flux de transport, appelé paquet de décrochage 52. Un tel paquet de décrochage 52 utilise par exemple le protocole SCTE-35. Ce paquet de décrochage indique soit l'heure de décrochage au flux d'origine, soit un décrochage au flux d'origine « immédiat ».

Dans l'exemple illustré en figure 5A, le paquet de décrochage 52 porte une information temporelle de présentation de décrochage indiquant l'heure de décrochage, exprimée en heure PTS, et correspond à une image de référence. Il s'agit par exemple d'une image IDR (« Instantaneous Decoder Refresh »), ce qui signifie que son décodage ne dépend pas d'autres images. Par exemple, le paquet de décrochage indique un décrochage à l'instant 19340,808s, noté PTS décrochage.

Pour déterminer l'instant de décrochage vidéo, on compare le PTS décrochage avec le PTS vidéo des paquets vidéo du flux d'origine, noté PTS vidéo live. Le décrochage vidéo est possible lorsque le PTS vidéo live d'un paquet vidéo du flux d'origine est égal au PTS de décrochage. Selon l'exemple illustré en figure 5A, l'instant de décrochage vidéo est défini par :

$$PTS \ d\acute{e}crochage = PTS \ vid\acute{e}o \ live = 19340{,}808s$$

Le premier paquet vidéo à remplacer est donc le paquet vidéo 53A.

Pour déterminer l'instant de décrochage audio, on compare le PTS décrochage avec le PTS audio des paquets audio du flux d'origine, noté PTS audio live. Le décrochage audio est possible lorsque le PTS audio live d'un paquet audio du flux d'origine est supérieur ou égal au PTS de décrochage. Selon l'exemple illustré en figure 5A, l'instant de décrochage audio est défini par le PTS audio live, tel que :

$$PTS \ audio \ live \geq PTS \ d\acute{e}crochage = 19340{,}808s$$

Le premier paquet audio à remplacer est donc le paquet audio 54A, qui présente un PTS audio égal à 19340,827s correspondant à l'instant de décrochage audio.

Selon un autre exemple, non illustré, le paquet de décrochage indique un décrochage immédiat. Selon cet exemple, on choisit également le moment opportun pour décrocher.

Ainsi, pour déterminer l'instant de décrochage vidéo, on cherche la première image de référence codée dans un paquet suivant le paquet de décrochage dans le flux d'origine. On mémorise l'information temporelle de présentation de décrochage associée à cette première image de référence, notée PTS vidéo live, correspondant à l'instant de décrochage vidéo :

$$PTS\ décrochage = PTS\ vidéo\ live$$

Pour déterminer l'instant de décrochage audio, on compare le PTS décrochage avec le PTS audio des paquets audio du flux d'origine, noté PTS audio live. Le décrochage audio est possible lorsque le PTS audio live d'un paquet audio du flux d'origine est supérieur ou égal au PTS de décrochage.

*5.2.2 Etape 2 : Remplacement des paquets vidéo et audio*

A partir de l'instant de décrochage vidéo (et jusqu'à un instant de retour vidéo), les paquets vidéo du flux d'origine sont remplacés par des paquets vidéo de remplacement, appartenant à au moins un contenu secondaire. De façon similaire, à partir de l'instant de décrochage audio (et jusqu'à un instant de retour audio), les paquets audio du flux d'origine sont remplacés par des paquets audio de remplacement, appartenant à au moins un contenu secondaire.

Le flux modifié ainsi obtenu est illustré en figure 5B. Selon cet exemple, le premier paquet vidéo à remplacer 53A du flux d'origine a été remplacé par un premier paquet vidéo de remplacement 53B dans le flux modifié. Le premier paquet audio à remplacer 54A du flux d'origine a été remplacé par un premier paquet audio de remplacement 54B dans le flux modifié. Les paquets de remplacement apparaissent en hachuré.

On présente ci-après un algorithme pour le remplacement des paquets vidéo. Un algorithme similaire peut être mis en œuvre pour le remplacement des paquets audio.

Lors du remplacement du premier paquet vidéo à remplacer 53A du flux d'origine par un premier paquet vidéo de remplacement 53B dans le flux modifié, un premier compteur représentatif d'un nombre de paquets entre deux paquets vidéo du contenu secondaire, noté nb_pkt_between_2video_ad_pkt, est initialisé à une valeur nulle. Une première variable représentative d'un nombre de paquets avant le prochain paquet vidéo à remplacer, notée nb_pkt_next_video_insertion, est initialisée à la valeur d'une variable de ratio vidéo cumulée, notée video_insertion_ratio_cumul.

La variable video_insertion_ratio_cumul est définie à partir du ratio vidéo : video_insertion_ratio_cumul += ratio vidéo.

Le ratio vidéo est défini par le rapport d'une estimation du débit du flux d'origine et d'une estimation du débit vidéo du contenu secondaire (par exemple une publicité) :

$$ratio\ vidéo = \frac{débit\ flux\ d'origine\ estimé}{débit\ publicité\ vidéo\ estimé}$$

La première image insérée est une image de référence et elle remplace une image de référence, le changement se produit donc sans perturbation pour l'utilisateur.

A chaque paquet vidéo à remplacer du flux d'origine, le premier compteur nb_pkt_between_2video_ad_pkt s'incrémente. Dès que le premier compteur nb_pkt_between_2video_ad_pkt est supérieur ou égal à la première variable nb_pkt_next_video_insertion, alors l'insertion d'un paquet vidéo du contenu secondaire est possible, en remplacement d'un paquet vidéo à remplacer du flux d'origine. Dès que le paquet vidéo du contenu secondaire est inséré, la première variable nb_pkt_next_video_insertion est mise à jour.

Si un paquet vidéo à remplacer du flux d'origine n'est pas remplacé par un paquet vidéo du ou des contenus secondaires, parce que le nombre de paquets vidéo de remplacement du ou des contenus secondaires est inférieur au nombre de paquets vidéo à remplacer du contenu principal, alors ce paquet vidéo à remplacer du contenu principal est supprimé et un paquet nul est mis à sa place dans le flux modifié.

*5.2.3 Etape 3 : Mise à jour des champs CC, PTS, DTS et PCR*

Afin que le remplacement d'un contenu principal par un ou plusieurs contenus secondaires soit transparent pour un décodeur, les valeurs des compteurs de continuité audio et vidéo, PTS et DTS vidéo, PTS audio, et l'horloge de référence PCR sont mis à jour dans les paquets de remplacement du flux modifié, comme illustré en figure 5B.

Plus précisément, l'horloge de référence PCR (qui est associée aux paquets vidéo selon l'exemple illustré), est mise à jour comme suit :

$$PCR(n) = PCR(n - 1) + nombre\ de\ paquets\ entre\ deux\ paquets\ PCR * pas\ PCR$$

où le pas PCR est la durée d'un paquet du flux d'origine exprimé en heure PCR, à savoir en nombre de coups d'horloge à 27Mhz, et $PCR(0)$ est égal à la dernière valeur PCR avant le décrochage.

Par exemple, le premier paquet vidéo de remplacement 53B porte l'horloge de référence $PCR(0)$ initialisée à la dernière valeur d'horloge avant le décrochage, soit $PCR(0) = 19340,280s$. Le paquet vidéo de remplacement suivant portant une horloge PCR est le paquet 55B, tel que $PCR(1) = PCR(0) + 4 * pas\ PCR$.

Les compteurs de continuité vidéo (CC vidéo) et audio (CC audio) sont mis à jour de la manière suivante :

- le CC vidéo du premier paquet vidéo de remplacement 53B est initialisé à la valeur du compteur de continuité du dernier paquet vidéo (56) du flux d'origine avant le premier paquet vidéo de remplacement 53B, plus un : *CC vidéo* (1) = 8
- le CC vidéo des autres paquets vidéo de remplacement est mis à jour selon la formule

$$CC\ vidéo(n) = (CC\ vidéo(n - 1) + 1)\ modulo\ 16$$

- le CC audio du premier paquet audio de remplacement 54B est initialisé à la valeur du compteur de continuité du dernier paquet audio (57) du flux d'origine avant le premier paquet audio de remplacement 54B plus un : *CC audio* (1) = 15
- le CC audio des autres paquets audio de remplacement est mis à jour selon la formule

$$CC\ audio(n) = (CC\ audio(n - 1) + 1)\ modulo\ 16.$$

Plusieurs cas sont à distinguer pour la mise à jour de l'information temporelle de décodage vidéo (DTS vidéo), selon le nombre de contenus secondaires.

Pour le premier paquet vidéo de remplacement appartenant à un premier contenu secondaire, on initialise le DTS vidéo du premier paquet vidéo de remplacement 53B, noté *DTS vidéo inséré* à la valeur du DTS du premier paquet vidéo à remplacer, noté *DTS vidéo live* :

$$DTS\ vidéo\ inséré(0) = DTS\ vidéo\ live = 19340,788s$$

Pour le premier paquet vidéo de remplacement appartenant à un autre contenu secondaire (dans le cas où l'on considère plusieurs publicités par exemple), on initialise le DTS vidéo de ce premier paquet vidéo de remplacement, noté *DTS vidéo inséré(n)* selon la formule :

$$DTS\ vidéo\ inséré(n) = \big(DTS\ vidéo\ inséré(n - 1) + \Delta DTS\ vidéo(n - 1)\big)\ modulo\ 2^{33}$$

avec :

$$\Delta DTS\ vidéo(n - 1) = DTS\ vidéo\ inséré(n - 1) - DTS\ vidéo\ inséré(n - 2)$$

et

*DTS vidéo inséré(n* - 1) et *DTS vidéo inséré(n* - 2) les deux dernières valeurs de DTS vidéo insérées.

Pour les autres paquets vidéo de remplacement (appartenant à un premier contenu secondaire ou à un autre contenu secondaire), on applique la formule suivante :

$$DTS\ vidéo\ inséré(n)$$
$$= (DTS\ vidéo\ inséré(n-1)$$
$$+ \big(DTS\ vidéo\ cont\ sec(n) - DTS\ vidéo\ cont\ sec(n-1)\big))\ modulo\ 2^{33}$$

avec :

DTS vidéo cont sec(n) la valeur DTS vidéo du n-ième paquet DTS du contenu secondaire, et
DTS vidéo cont sec(n) - DTS vidéo cont sec(n - 1) le pas DTS du contenu secondaire.

Pour la mise à jour de l'information temporelle de présentation vidéo (PTS vidéo) des paquets de remplacement, on utilise la formule suivante :

$$PTS\ vidéo\ inséré(n)$$
$$= (DTS\ vidéo\ inséré(n)$$
$$+ \big(PTS\ vidéo\ cont\ sec(n) - DTS\ vidéo\ cont\ sec(n)\big))\ modulo\ 2^{33}$$

avec :
PTS vidéo cont sec (n) la valeur PTS vidéo du n-ième paquet PTS du contenu secondaire.

Cette formule permet de garantir la conservation du $\Delta PTS/DTS$ du contenu secondaire. Ainsi, si dans le contenu secondaire on a PTS = DTS, alors dans les paquets de remplacement du flux modifié on a aussi PTS = DTS.

Plusieurs cas sont à distinguer pour la mise à jour de l'information temporelle de présentation audio (PTS audio), selon le nombre de contenus secondaires.

Pour le premier paquet audio de remplacement appartenant à un premier contenu secondaire, on initialise le PTS audio du premier paquet audio de remplacement 54B, noté PTS audio inséré, à la valeur du PTS du premier paquet vidéo à remplacer, noté PTS audio live :

$$PTS\ audio\ inséré(0) = PTS\ audio\ live = 19340{,}827s$$

Pour le premier paquet audio de remplacement appartenant à un autre contenu secondaire (dans le cas où l'on considère plusieurs publicités par exemple), on initialise le PTS audio de ce premier paquet audio de remplacement, noté PTS audio inséré(n) selon la formule :

$$PTS\ audio\ inséré(n) = \big(PTS\ audio\ inséré(n-1) + \Delta PTS\ audio(n-1)\big)\ modulo\ 2^{33}$$

avec :

$$\Delta PTS\ audio(n-1) = PTS\ audio\ inséré(n-1) - PTS\ audio\ inséré(n-2),$$

et
PTS audio inséré(n - 1) et PTS audio inséré(n - 2) les deux dernières valeurs de PTS audio insérées.

Pour les autres paquets audio de remplacement (appartenant à un premier contenu secondaire ou à un autre contenu secondaire), on applique la formule suivante :

$$PTS\ audio\ inséré(n)$$
$$= (PTS\ audio\ inséré(n-1)$$
$$+ \big(PTS\ audio\ cont\ sec(n) - PTS\ audio\ cont\ sec(n-1)\big))\ modulo\ 2^{33}$$

avec :

*PTS audio cont sec*(*n*) la valeur PTS audio du n-ième paquet PTS du contenu secondaire, et

*PTS audio cont sec*(*n*) - *DTS audio cont sec*(*n* - 1) le pas PTS du contenu secondaire.

*5.2.4 Etape 4 : Détermination des instants de retour vidéo et audio*

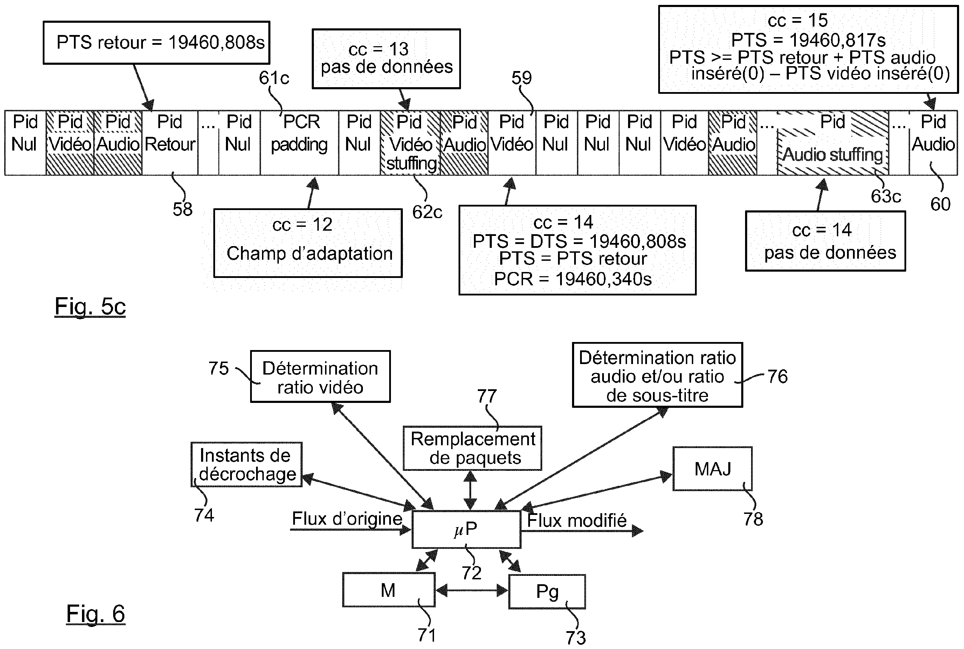

On considère désormais la figure 5C, illustrant le retour au flux d'origine.

Pour retourner d'un contenu secondaire vers le contenu principal, on cherche tout d'abord à déterminer un instant de retour vidéo et un instant de retour audio. Ces informations sont, selon l'exemple illustré en figure 5C, encapsulées dans un paquet du flux de transport, appelé paquet de retour 58. Un tel paquet de retour 58 utilise par exemple le protocole SCTE-35. Ce paquet de retour indique soit l'heure de retour au flux d'origine, soit un retour au flux d'origine « immédiat ».

Dans l'exemple illustré en figure 5C, le paquet de retour 58 porte une information temporelle de présentation de retour indiquant l'heure de retour, exprimée en heure PTS, et correspond à une image de référence. Il s'agit par exemple d'une image IDR. Par exemple, le paquet de retour indique un retour à l'instant 19460,808s, noté PTS retour.

Pour déterminer l'instant de retour vidéo, on compare le PTS retour avec le PTS vidéo des paquets vidéo du flux modifié, noté PTS vidéo live. Le retour vidéo est possible lorsque le PTS vidéo live d'un paquet vidéo du flux modifié est égal au PTS retour. Selon l'exemple illustré en figure 5C, l'instant de retour vidéo est défini par :

$$PTS\ retour = PTS\ vidéo\ live = 19460{,}808s$$

Le premier paquet vidéo de retour est donc le paquet vidéo 59.

Pour déterminer l'instant de retour audio, on compare le PTS retour avec le PTS audio des paquets audio du flux modifié, noté PTS audio live. Le retour audio est possible lorsque le PTS audio live d'un paquet audio du flux modifié est supérieur ou égal à une information temporelle de présentation audio de retour estimée, notée PTS audio live retour estimé, déterminée à partir du PTS de retour et des paquets vidéo et audio ou de sous-titre de remplacement du flux modifié :

$$PTS\ comp\ live\ retour\ estimé = PTS\ audio\ live\ retour\ estimé$$

$$= PTS\ retour + \Delta PTS\ audio\ video\ inséré$$

avec :

$$\Delta PTS\ audio\ video\ inséré = PTS\ audio\ inséré(0) - PTS\ vidéo\ inséré(0)$$

Selon l'exemple illustré en figure 5C, l'instant de retour audio est défini par le PTS audio live, tel que : *PTS audio live ≥ PTS audio live retour estimé*

Le premier paquet audio de retour est donc le paquet audio 60, qui présente un PTS audio égal à 19460,817ss correspondant à l'instant de retour audio.

Selon un autre exemple, non illustré, le paquet de retour indique un retour immédiat. Selon cet exemple, on choisit également le moment opportun pour raccrocher.

Ainsi, pour déterminer l'instant de retour vidéo, on cherche la première image de référence codée dans un paquet suivant le paquet de retour dans le flux modifié. On mémorise l'information temporelle de présentation de retour associée à cette image de référence, notée PTS vidéo live, correspondant à l'instant de retour vidéo : *PTS retour = PTS vidéo live*

Pour déterminer l'instant de retour audio, on compare le PTS retour avec le PTS audio des paquets audio du flux modifié, noté PTS audio live. Le retour audio est possible lorsque le PTS audio live d'un paquet audio du flux modifié, dit premier paquet de retour audio, est supérieur ou égal à une information temporelle de présentation audio de retour estimée, notée PTS audio live retour estimé, déterminée à partir du PTS retour et des paquets vidéo et audio ou de sous-titre de remplacement du flux modifié, comme décrit ci-dessus.

*5.2.5 Etape 5 : Retour au flux d'origine*

A partir de l'instant de retour vidéo, on arrête le remplacement des paquets vidéo du contenu principal par des paquets vidéo du contenu secondaire. De façon similaire, à partir de l'instant de retour audio, on arrête le remplacement des paquets audio du contenu principal par des paquets audio du contenu secondaire.

On détaille ci-après un exemple de mise en œuvre du retour sur le contenu principal.

Concernant le traitement vidéo, on note que si le nombre d'images appartenant au(x) contenu(s) secondaire(s) à insérer est égal au nombre d'images à remplacer dans le flux d'origine, il n'est pas nécessaire de mettre en œuvre un traitement particulier.

Si le nombre d'images appartenant au(x) contenu(s) secondaire(s) à insérer est inférieur au nombre d'images à remplacer dans le flux d'origine, tous les paquets vidéo du ou des contenus secondaires sont insérés dans le flux modifié, et le retour au flux d'origine est mis en œuvre dès que le DTS d'un paquet vidéo du flux modifié, noté *DTS vidéo live,* est supérieur au DTS du dernier paquet vidéo de remplacement : *DTS vidéo live > dernier DTS vidéo inséré*

En particulier, pour améliorer la transition visuelle au moment du retour au flux d'origine, en plus de la condition *DTS vidéo live > dernier DTS vidéo inséré,* l'image de retour est choisie pour être une image de référence.

Si le nombre d'images appartenant au(x) contenu(s) secondaire(s) à insérer est supérieur au nombre d'images à remplacer dans le flux d'origine, l'arrêt de l'insertion se fait dès que :

$$DTS\ vidéo\ inséré \geq DTS\ vidéo\ live\ retour\ estimé$$

avec *DTS vidéo live retour estimé* une information temporelle de décodage vidéo de retour estimée déterminée à partir des paquets vidéo de remplacement du flux modifié, telle que : *DTS vidéo live retour estimé = PTS retour + Δ PTS/DTS vidéo inséré* avec : *ΔPTS/DTS vidéo inséré = PTS vidéo inséré*(0) - *DTS vidéo inséré* (0)

Après avoir inséré le dernier paquet vidéo du ou des contenus secondaires à insérer, et tant que le retour au flux d'origine n'est pas possible (i.e. avant l'instant de retour vidéo), si un paquet PCR était présent dans le flux d'origine (par exemple dans un Pid vidéo du flux d'origine portant une horloge PCR), celui-ci est conservé dans le flux modifié, en gardant uniquement le champ d'adaptation (« adaptation field »). Un tel paquet PCR portant uniquement le champ d'adaptation est également noté « PCR padding » (paquet référence 61C sur la figure 5C).

Concernant le traitement audio, on note que si le nombre de trames audio appartenant au(x) contenu(s) secondaire(s) à insérer est égal au nombre de trames audio à remplacer dans le flux d'origine, il n'est pas nécessaire de mettre en œuvre un traitement particulier.

Si le nombre de trames audio appartenant au(x) contenu(s) secondaire(s) à insérer est inférieur au nombre de trames audio à remplacer dans le flux d'origine, tous les paquets audio du ou des contenus secondaires sont insérés dans le flux modifié, et le retour au flux d'origine est mis en œuvre dès que le PTS d'un paquet audio du flux modifié, noté *PTS audio live,* est supérieur au PTS du dernier paquet audio de remplacement :

$$PTS\ audio\ live > dernier\ PTS\ audio\ inséré$$

Si le nombre de trames audio appartenant au(x) contenu(s) secondaire(s) à insérer est supérieur au nombre de trames audio à remplacer dans le flux d'origine, l'arrêt de l'insertion se fait dès que : *PTS audio inséré ≥ PTS audio live retour estimé.*

Finalement, pour garantir la continuité du compteur de continuité vidéo (respectivement audio) entre le dernier paquet vidéo (respectivement audio) de remplacement et le premier paquet vidéo (respectivement audio) de retour, des paquets de bourrage vidéo (respectivement audio) peuvent être insérés dans le flux modifié.

Par exemple, en revenant à la figure 5C, le paquet 62C est un paquet de bourrage vidéo, également appelé « vidéo stuffing ». De manière similaire, le paquet 63C est un paquet de bourrage audio, également appelé « audio stuffing ». De tels paquets de bourrage vidéo/audio ne portent pas de données, mais permettent d'incrémenter le compteur de continuité vidéo/audio d'une unité.

On note que pour connaître le compteur de continuité du premier paquet vidéo ou audio de retour, il faut mettre en mémoire tampon le flux modifié. L'insertion des paquets de bourrage vidéo ou audio peut être mise en œuvre lorsque l'on détecte que le prochain paquet du flux modifié est le premier paquet vidéo ou audio de retour, par exemple en remplaçant des paquets nul par des paquets de bourrage vidéo ou audio dans le flux modifié.

*5.3 Structure d'un équipement de remplacement de contenus*

On présente finalement, en relation avec la figure 6, la structure simplifiée d'un équipement de remplacement de contenus mettant en œuvre le procédé de remplacement de contenus selon le mode de réalisation particulier décrit ci-dessus.

Un tel équipement de remplacement de contenus comprend une mémoire 71, par exemple une mémoire tampon, une unité de traitement 72, équipée par exemple d'un microprocesseur *µP,* et pilotée par le programme d'ordinateur 73, mettant en œuvre le procédé de remplacement de contenus selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un flux de transport d'origine, et au moins un contenu secondaire à insérer dans le flux. Le microprocesseur de l'unité de traitement 72 met en œuvre les étapes du procédé de remplacement de contenus décrit précédemment, selon les instructions du programme d'ordinateur 73, pour basculer d'un programme principal vers un programme secondaire. Pour cela, l'équipement de remplacement de contenus comprend également :

- un module de détermination 74 d'un instant de décrochage vidéo et d'au moins un instant de décrochage audio ou de sous-titre, à partir d'au moins un paquet de décrochage du flux d'origine,
- un module de détermination 75 d'un ratio entre le débit dudit flux d'origine et le débit vidéo dudit contenu secondaire, dit ratio vidéo,
- un module de détermination 76 d'un ratio entre le débit dudit flux d'origine et le débit audio dudit contenu secondaire, dit ratio audio, et/ou d'un ratio entre le débit dudit flux d'origine et le débit de sous-titre dudit contenu secondaire, dit ratio de sous-titre,
- un module de remplacement 77, dans le flux d'origine :

  o d'au moins un paquet vidéo du contenu principal, dit paquet vidéo à remplacer, par au moins un paquet vidéo du contenu secondaire ou par un paquet nul, dit paquet vidéo de remplacement, activé à partir de l'instant de décrochage vidéo, et
  o d'au moins un paquet audio ou de sous-titre du contenu principal, dit paquet audio ou de sous-titre à remplacer, par au moins un paquet audio ou de sous-titre du contenu secondaire ou par un paquet nul, dit paquet audio ou de sous-titre de remplacement, activé à partir du ou des instants de décrochage audio ou de sous-titre,

  délivrant un flux modifié,
- un module de mise à jour 78, dans le flux modifié :

  o d'une horloge de référence,
  o d'un compteur de continuité de paquets vidéo et d'au moins une information temporelle de reconstruction vidéo dans le ou les paquets vidéo de remplacement, et
  o d'un compteur de continuité de paquets audio ou de sous-titre et d'au moins une information temporelle de reconstruction audio ou de sous-titre dans le ou les paquets audio ou de sous-titre de remplacement, tenant compte des informations temporelles de reconstruction vidéo.

Ces modules peuvent être pilotés par le microprocesseur de l'unité de traitement 72.

**Revendications**

1. Procédé de remplacement d'un contenu principal par au moins un contenu secondaire, ledit contenu principal étant porté par un flux de transport issu d'un émetteur fixe et destiné à une pluralité de sites de diffusion, dit flux d'origine, **caractérisé en ce qu'**il met en œuvre les étapes suivantes, au niveau d'au moins un équipement de remplacement de contenus associé à au moins un desdits sites de diffusion :

   - réception dudit flux d'origine,
   - détermination (21) d'un instant de décrochage vidéo et d'au moins un instant de décrochage audio ou de sous-titre, à partir d'au moins un paquet de décrochage dudit flux d'origine,
   - détermination d'un ratio entre le débit dudit flux d'origine et le débit vidéo dudit contenu secondaire, dit ratio vidéo,
   - détermination d'un ratio entre le débit dudit flux d'origine et le débit audio dudit contenu secondaire, dit ratio audio, et/ou d'un ratio entre le débit dudit flux d'origine et le débit de sous-titre dudit contenu secondaire, dit ratio de sous-titre,
   - remplacement (22), dans ledit flux d'origine :

     ◦ d'au moins un paquet vidéo dudit contenu principal, dit paquet vidéo à remplacer, par au moins un paquet vidéo dudit contenu secondaire ou par un paquet nul, dit paquet vidéo de remplacement, à partir dudit instant de décrochage vidéo, et

∘ d'au moins un paquet audio ou de sous-titre dudit contenu principal, dit paquet audio ou de sous-titre à remplacer, par au moins un paquet audio ou de sous-titre dudit contenu secondaire ou par un paquet nul, dit paquet audio ou de sous-titre de remplacement, à partir dudit au moins un instant de décrochage audio ou de sous-titre,

délivrant un flux modifié identique audit flux d'origine en terme de structure et de nombre de paquets, mais dont le contenu est modifié,
ladite étape de remplacement mettant en œuvre les sous-étapes suivantes :

pour le remplacement d'au moins un paquet vidéo à remplacer dudit contenu principal :

- initialisation d'un premier compteur représentatif d'un nombre de paquets entre deux paquets vidéo de remplacement du contenu secondaire à une valeur nulle, et d'une première variable représentative d'un nombre de paquets avant le prochain paquet vidéo à remplacer à la valeur d'une variable de ratio vidéo cumulée, définie à partir dudit ratio vidéo,
- à chaque paquet vidéo à remplacer dudit flux d'origine :

∘ incrémentation dudit premier compteur,
∘ remplacement dudit paquet vidéo à remplacer par un desdits paquets vidéo du contenu secondaire lorsque la valeur dudit premier compteur est supérieure ou égale à la valeur de ladite première variable,
∘ remplacement dudit paquet vidéo à remplacer par un paquet nul sinon,
∘ mise à jour de ladite première variable ;

pour le remplacement d'au moins un paquet audio ou de sous-titre à remplacer dudit contenu principal :

- initialisation d'un deuxième compteur représentatif d'un nombre de paquets entre deux paquets audio ou de sous-titre de remplacement du contenu secondaire à une valeur nulle, et d'une deuxième variable représentative d'un nombre de paquets avant le prochain paquet audio ou de sous-titre à remplacer à la valeur d'une variable de ratio audio ou de sous-titre cumulée, définie à partir dudit ratio audio ou de sous-titre,
- à chaque paquet audio ou de sous-titre à remplacer dudit flux d'origine :

∘ incrémentation dudit deuxième compteur,
∘ remplacement dudit paquet audio ou de sous-titre à remplacer par un desdits paquets audio ou de sous-titre du contenu secondaire lorsque la valeur dudit deuxième compteur est supérieure ou égale à la valeur de ladite deuxième variable,
∘ remplacement dudit paquet audio à remplacer par un paquet nul sinon,
∘ mise à jour de ladite deuxième variable,

- mise à jour (23), dans ledit flux modifié :

∘ d'une horloge de référence,
∘ d'un compteur de continuité de paquets vidéo et d'au moins une information temporelle de reconstruction vidéo dans le ou lesdits paquets vidéo de remplacement, et
∘ d'un compteur de continuité de paquets audio ou de sous-titre et d'au moins une information temporelle de reconstruction audio ou de sous-titre dans le ou lesdits paquets audio ou de sous-titre de remplacement, tenant compte de ladite au moins une information temporelle de reconstruction vidéo.

2. Procédé de remplacement selon la revendication 1, **caractérisé en ce que** ladite étape de détermination d'un instant de décrochage vidéo et d'au moins un instant de décrochage audio ou de sous-titre met en œuvre les sous-étapes suivantes :

- détection d'une première image de référence codée dans un paquet suivant ledit paquet de décrochage (52) dans ledit flux d'origine,
- obtention d'une information temporelle de présentation de décrochage associée à ladite première image de référence, délivrant ledit instant de décrochage vidéo,
- comparaison de ladite information temporelle de présentation de décrochage avec une information temporelle de présentation audio ou de sous-titre associée à au moins un paquet audio ou de sous-titre dudit flux d'origine, - lorsque ladite information temporelle de présentation audio ou de sous-titre associée à un paquet audio ou de sous-titre dudit flux d'origine, dit premier paquet audio ou de sous-titre à remplacer, est supérieure ou égale à ladite information temporelle de présentation de décrochage : affectation de ladite information temporelle de présentation audio ou de sous-titre associée audit premier paquet audio ou de sous-titre à remplacer audit au moins un instant de décrochage audio ou de sous-titre.

**3.** Procédé de remplacement selon la revendication 1, **caractérisé en ce que** ladite étape de détermination d'un instant de décrochage vidéo et d'au moins un instant de décrochage audio ou de sous-titre met en œuvre les sous-étapes suivantes :

- obtention, à partir dudit paquet de décrochage, d'une information temporelle de présentation de décrochage associée audit flux d'origine,
- comparaison de ladite information temporelle de présentation de décrochage avec une information temporelle de présentation vidéo associée à au moins un paquet vidéo dudit flux d'origine,
- lorsque ladite information temporelle de présentation de décrochage et ladite information temporelle de présentation vidéo associée à un paquet vidéo dudit flux d'origine, dit premier paquet vidéo à remplacer, sont identiques : affectation de ladite information temporelle de présentation vidéo associée au premier paquet vidéo à remplacer audit instant de décrochage vidéo,
- comparaison de ladite information temporelle de présentation de décrochage avec une information temporelle de présentation audio ou de sous-titre associée à au moins un paquet audio ou de sous-titre dudit flux d'origine,
- lorsque ladite information temporelle de présentation audio ou de sous-titre associée à un paquet audio ou de sous-titre dudit flux d'origine, dit premier paquet audio ou de sous-titre à remplacer, est supérieure ou égale à ladite information temporelle de présentation de décrochage : affectation de ladite information temporelle de présentation audio ou de sous-titre associée au premier paquet audio ou de sous-titre à remplacer audit au moins un instant de décrochage audio ou de sous-titre.

**4.** Procédé de remplacement selon l'une quelconque des revendications 1 à 3, **caractérisé en ce que** ladite étape de mise à jour d'une horloge de référence met en œuvre la formule suivante :

$$PCR(n) = PCR(n-1) + nombre\ de\ paquets\ entre\ deux\ paquets\ PCR * pas\ PCR$$

avec:

$PCR(n)$ l'horloge de référence du n-ième paquet portant une horloge de référence, $n \geq 1$,
$PCR(0)$ la valeur de l'horloge de référence du dernier paquet portant une horloge de référence dudit flux d'origine, avant ledit premier paquet vidéo de remplacement, et
le « pas PCR » correspondant à la durée d'un paquet dudit flux d'origine.

**5.** Procédé de remplacement selon l'une quelconque des revendications 1 à 4, **caractérisé en ce que** ladite étape de mise à jour d'un compteur de continuité de paquets vidéo et d'au moins une information temporelle de reconstruction vidéo met en œuvre les sous-étapes suivantes :

- pour la mise à jour dudit compteur de continuité de paquets vidéo :

  ◦ initialisation dudit compteur de continuité du premier paquet vidéo de remplacement à la valeur du compteur de continuité du dernier paquet vidéo dudit flux d'origine avant ledit premier paquet vidéo de remplacement, plus un ;
  ◦ mise à jour dudit compteur de continuité des autres paquets vidéo de remplacement selon la formule suivante :

$$CC\ vidéo(n) = (CC\ vidéo(n-1) + 1)\ modulo\ 16$$

avec CC vidéo (n) le compteur de continuité du n-ième paquet vidéo de remplacement, n > 1 ;

- pour la mise à jour de ladite au moins une information temporelle de reconstruction vidéo :

  ◦ pour la mise à jour d'une information temporelle de décodage vidéo :

  - pour le premier paquet vidéo de remplacement appartenant à un premier contenu secondaire, initialisation de l'information temporelle de décodage vidéo du premier paquet vidéo de remplacement à la valeur d'une information temporelle de décodage vidéo du premier paquet vidéo remplacé ;
  - pour le premier paquet vidéo de remplacement appartenant à un autre contenu secondaire, initialisation de l'information temporelle de décodage vidéo du premier paquet vidéo de remplacement selon la formule :

$$DTS\ vidéo\ inséré(n)$$
$$= \big(DTS\ vidéo\ inséré(n-1)$$
$$+ \Delta DTS\ vidéo(n-1)\big)\ modulo\ 2^{33}$$

avec
*DTS vidéo inséré* (*n*) la valeur de l'information temporelle de décodage vidéo du n-ième paquet portant une information temporelle de décodage vidéo parmi lesdits paquets de remplacement vidéo dudit flux modifié,

$$\Delta DTS\ vidéo(n-1)$$
$$= DTS\ vidéo\ inséré(n-1) - DTS\ vidéo\ inséré(n-2)$$

  - mise à jour de l'information temporelle de décodage vidéo des autres paquets vidéo de remplacement selon la formule :

$$DTS\ vidéo\ inséré(n)$$
$$= (DTS\ vidéo\ inséré(n-1)$$
$$+ \big(DTS\ vidéo\ cont\ sec(n)$$
$$- DTS\ vidéo\ cont\ sec(n-1)\big))\ modulo\ 2^{33}$$

avec
*DTS vidéo cont sec* (*n*) la valeur de l'information temporelle de décodage vidéo du n-ième paquet portant une information temporelle de décodage vidéo parmi lesdits paquets vidéo dudit contenu secondaire,

  ◦ pour la mise à jour d'une information temporelle de présentation vidéo :

  - mise à jour de l'information temporelle de présentation vidéo des paquets vidéo de remplacement selon la formule suivante :

$$PTS\ vidéo\ inséré(n)$$
$$= (DTS\ vidéo\ inséré(n)$$
$$+ \big(PTS\ vidéo\ cont\ sec(n)$$
$$- DTS\ vidéo\ cont\ sec(n)\big))\ modulo\ 2^{33}$$

avec
*PTS vidéo inséré* (*n*) la valeur de l'information temporelle de présentation vidéo du n-ième paquet portant une information temporelle de présentation vidéo parmi lesdits paquets de remplacement vidéo dudit flux modifié,

*PTS vidéo cont sec* (*n*) la valeur de l'information temporelle de présentation vidéo du n-ième paquet portant une information temporelle de présentation vidéo parmi lesdits paquets vidéo dudit contenu secondaire.

6. Procédé de remplacement selon l'une quelconque des revendications 1 à 5, **caractérisé en ce que** ladite étape de mise à jour d'un compteur de continuité de paquets audio ou de sous-titre et d'au moins une information temporelle de reconstruction audio ou de sous-titre met en œuvre les sous-étapes suivantes :

- pour la mise à jour dudit compteur de continuité de paquets audio ou de sous-titre :

◦ initialisation dudit compteur de continuité du premier paquet audio ou de sous-titre de remplacement à la valeur du compteur de continuité du dernier paquet audio ou de sous-titre dudit flux d'origine avant ledit premier paquet audio ou de sous-titre de remplacement, plus un ;
◦ mise à jour dudit compteur de continuité des autres paquets audio ou de sous-titre de remplacement selon la formule suivante :

$$CC\ comp(n) = (CC\ comp(n-1) + 1)\ modulo\ 16$$

avec *CC comp* (*n*) le compteur de continuité audio ou de sous-titre du n-ième paquet audio ou de sous-titre de remplacement, *n* > 1 ;

- pour la mise à jour de ladite au moins une information temporelle de reconstruction audio ou de sous-titre :

◦ pour le premier paquet audio ou de sous-titre de remplacement appartenant à un premier contenu secondaire, initialisation d'une information temporelle de présentation audio ou de sous-titre du premier paquet audio ou de sous-titre de remplacement à la valeur d'une information temporelle de présentation audio ou de sous-titre du premier paquet audio ou de sous-titre remplacé ;
◦ pour le premier paquet audio ou de sous-titre de remplacement appartenant à un autre contenu secondaire, initialisation de l'information temporelle de présentation audio ou de sous-titre du premier paquet audio ou de sous-titre de remplacement selon la formule :

$$PTS\ comp\ inséré(n)$$
$$= \big(PTS\ comp\ inséré(n-1) + \Delta PTS\ comp(n-1)\big)\ modulo\ 2^{33}$$

avec
*PTS comp inséré* (*n*) la valeur de l'information temporelle de présentation audio ou de sous-titre du n-ième paquet portant une information temporelle de présentation audio ou de sous-titre parmi lesdits paquets de remplacement audio ou de sous-titre dudit flux modifié,

$$\Delta PTS\ comp(n-1) = PTS\ comp\ inséré(n-1) - PTS\ comp\ inséré(n-2)$$

◦ mise à jour de l'information temporelle de présentation audio ou de sous-titre des autres paquets audio ou de sous-titre de remplacement selon la formule :

$$PTS\ comp\ inséré(n)$$
$$= (PTS\ comp\ inséré(n-1)$$
$$+ \big(PTS\ comp\ cont\ sec(n)$$
$$- PTS\ comp\ cont\ sec(n-1))\big)\ modulo\ 2^{33}$$

avec

*PTS comp cont sec* (*n*) la valeur de l'information temporelle de présentation audio ou de sous-titre du n-ième paquet portant une information temporelle de présentation audio ou de sous-titre parmi lesdits paquets audio ou de sous-titre dudit contenu secondaire.

**7.** Procédé de remplacement selon l'une quelconque des revendications 1 à 6, **caractérisé en ce qu'**il comprend en outre une étape de détermination d'un instant de retour vidéo et d'au moins un instant de retour audio ou de sous-titre, à partir d'un paquet de retour (58) dudit flux modifié.

**8.** Procédé de remplacement selon la revendication 7, **caractérisé en ce que** ladite étape de détermination d'un instant de retour vidéo et d'au moins un instant de retour audio ou de sous-titre met en œuvre les sous-étapes suivantes :

- détection d'une deuxième image de référence codée dans un paquet suivant ledit paquet de retour dans ledit flux modifié,
- obtention d'une information temporelle de présentation de retour associée à ladite deuxième image de référence, délivrant ledit instant de retour vidéo,
- comparaison de ladite information temporelle de présentation de retour avec une information temporelle de présentation audio ou de sous-titre associée à au moins un paquet audio ou de sous-titre dudit flux modifié,
- lorsque ladite information temporelle de présentation audio ou de sous-titre associée à un paquet audio ou de sous-titre du flux modifié, dit premier paquet audio ou de sous-titre de retour, est supérieure ou égale à une information temporelle de présentation audio ou de sous-titre de retour estimée, déterminée à partir de ladite information temporelle de présentation de retour et desdits paquets vidéo et audio ou de sous-titre de remplacement dans ledit flux modifié : affectation de ladite information temporelle de présentation audio ou de sous-titre associée audit premier paquet audio ou de sous-titre de retour audit au moins un instant de retour audio ou de sous-titre.

**9.** Procédé de remplacement selon la revendication 7, **caractérisé en ce que** ladite étape de détermination d'un instant de retour vidéo et d'au moins un instant de retour audio ou de sous-titre met en œuvre les sous-étapes suivantes :

- obtention, à partir dudit paquet de retour, d'une information temporelle de présentation de retour associée audit flux modifié,
- comparaison de ladite information temporelle de présentation de retour avec une information temporelle de présentation vidéo associée à au moins un paquet vidéo dudit flux modifié,
- lorsque ladite information temporelle de présentation de retour et ladite information temporelle de présentation vidéo associée à un paquet vidéo dudit flux modifié, dit premier paquet vidéo de retour, sont identiques : affectation de ladite information temporelle de présentation vidéo associée audit premier paquet vidéo de retour audit instant de retour vidéo,
- comparaison de ladite information temporelle de présentation de retour avec une information temporelle de présentation audio ou de sous-titre associée à au moins un paquet audio ou de sous-titre dudit flux modifié,
- lorsque ladite information temporelle de présentation audio ou de sous-titre associée à un paquet audio ou de sous-titre dudit flux modifié , dit premier paquet audio ou de sous-titre de retour, est supérieure ou égale à une information temporelle de présentation audio ou de sous-titre de retour estimée, déterminée à partir de ladite information temporelle de présentation de retour et desdits paquets vidéo et audio ou de sous-titre de remplacement dudit flux modifié : affectation de ladite information temporelle de présentation audio ou de sous-titre associée audit premier paquet audio ou de sous-titre de retour audit au moins un instant de retour audio ou de sous-titre.

**10.** Procédé de remplacement selon quelconque des revendications 8 et 9, **caractérisé en ce que** ladite information temporelle de présentation audio ou de sous-titre de retour estimée est déterminée de la manière suivante :

$$PTS\ comp\ live\ retour\ estimé = PTS\ retour + \Delta PTS\ comp\ vidéo\ inséré$$

avec :

$$\Delta PTS\ comp\ vidéo\ inséré\ =\ PTS\ comp\ inséré(0) - PTS\ vidéo\ inséré(0)$$

PTS retour ladite information temporelle de présentation de retour,
PTS comp inséré(0) ladite information temporelle de présentation audio ou de sous-titre du premier paquet audio ou de sous-titre de remplacement,
PTS vidéo inséré(0) ladite information temporelle de présentation vidéo du premier paquet vidéo de remplacement.

11. Procédé de remplacement selon l'une quelconque des revendications 1 à 10, **caractérisé en ce que** :

- si le nombre d'images appartenant audit au moins un contenu secondaire est inférieur au nombre d'images appartenant au contenu principal à remplacer, toutes les images appartenant audit au moins un contenu secondaire sont insérées dans ledit flux modifié, et le retour audit flux d'origine est mis en œuvre lorsqu'une information temporelle de décodage vidéo d'un paquet vidéo du flux modifié est supérieure à l'information temporelle de décodage vidéo du dernier paquet vidéo de remplacement du flux modifié ;
- si le nombre d'images appartenant audit au moins un contenu secondaire est supérieur au nombre d'images appartenant au contenu principal à remplacer, les images appartenant audit au moins un contenu secondaire sont insérées dans le flux modifié tant que l'information temporelle de décodage vidéo des paquets vidéo de remplacement est inférieure à une information temporelle de décodage vidéo de retour estimée.

12. Procédé de remplacement selon la revendication 11, **caractérisé en ce que** ladite information temporelle de décodage vidéo de retour estimée est déterminée de la manière suivante :

$$DTS\ vidéo\ live\ retour\ estimé = PTS\ retour + \Delta\,PTS/DTS\ vidéo\ inséré$$

avec :

$$\Delta\,PTS/DTS\ vidéo\ inséré = PTS\ vidéo\ inséré(0) - DTS\ vidéo\ inséré\ (0)$$

PTS retour ladite information temporelle de présentation de retour,
PTS vidéo inséré(0) ladite information temporelle de présentation vidéo du premier paquet vidéo de remplacement, et
DTS vidéo inséré(0) ladite information temporelle de décodage vidéo du premier paquet vidéo de remplacement.

13. Procédé de remplacement selon l'une quelconque des revendications 1 à 12, **caractérisé en ce que** :

- si le nombre de trames audio ou de sous-titre appartenant audit au moins un contenu secondaire est inférieur au nombre de trames audio ou de sous-titre appartenant au contenu principal à remplacer, toutes les trames audio ou de sous-titre appartenant audit au moins un contenu secondaire sont insérées dans ledit flux modifié, et le retour audit flux d'origine est mis en œuvre lorsqu'une information temporelle de présentation audio ou de sous-titre d'un paquet audio ou de sous-titre dudit flux modifié est supérieure à l'information temporelle de présentation audio ou de sous-titre du dernier paquet audio ou de sous-titre de remplacement dudit flux modifié ;
- si le nombre de trames audio ou de sous-titre appartenant audit au moins un contenu secondaire est supérieur au nombre de trames audio ou de sous-titre appartenant au contenu principal à remplacer, les trames audio ou de sous-titre appartenant audit au moins un contenu secondaire sont insérées dans le flux modifié tant que l'information temporelle de présentation audio ou de sous-titre des paquets audio ou de sous-titre de remplacement est inférieure à une information temporelle de présentation audio ou de sous-titre de retour estimée.

14. Procédé de remplacement selon l'une quelconque des revendications 7 à 10, **caractérisé en ce que**, après le dernier paquet vidéo de remplacement dudit flux modifié, et avant ledit instant de retour vidéo, si un paquet portant une horloge de référence est détecté, ledit paquet portant une horloge de référence est modifié pour conserver uniquement un champ d'adaptation de ladite horloge de référence dans ledit flux modifié.

15. Procédé de remplacement selon l'une quelconque des revendications 1 à 14, **caractérisé en ce qu'**il comprend une étape d'insertion d'au moins un paquet de bourrage dans le flux modifié, si le nombre de paquets vidéo, respectivement audio ou de sous-titre, appartenant audit au moins un contenu secondaire est inférieur au nombre de paquets vidéo, respectivement audio ou de sous-titre, appartenant au contenu principal à remplacer.

**16.** Equipement de remplacement d'un contenu principal par au moins un contenu secondaire,
ledit contenu principal étant porté par un flux de transport issu d'un émetteur fixe et destiné à une pluralité de sites de diffusion, dit flux d'origine,
**caractérisé en ce que** ledit équipement est associé à au moins un desdits sites de diffusion et comprend :

- un module de réception dudit flux d'origine,
- un module (74) de détermination d'un instant de décrochage vidéo et d'au moins un instant de décrochage audio ou de sous-titre, à partir d'au moins un paquet de décrochage dudit flux d'origine,
- un module (75) de détermination d'un ratio entre le débit dudit flux d'origine et le débit vidéo dudit contenu secondaire, dit ratio vidéo,
- un module (76) de détermination d'un ratio entre le débit dudit flux d'origine et le débit audio dudit contenu secondaire, dit ratio audio, et/ou d'un ratio entre le débit dudit flux d'origine et le débit de sous-titre dudit contenu secondaire, dit ratio de sous-titre,
- un module (77) de remplacement, dans ledit flux d'origine :

  ◦ d'au moins un paquet vidéo dudit contenu principal, dit paquet vidéo à remplacer, par au moins un paquet vidéo dudit contenu secondaire ou par un paquet nul, dit paquet vidéo de remplacement, activé à partir dudit instant de décrochage vidéo, et
  ◦ d'au moins un paquet audio ou de sous-titre dudit contenu principal, dit paquet audio ou de sous-titre à remplacer, par au moins un paquet audio ou de sous-titre dudit contenu secondaire ou par un paquet nul, dit paquet audio ou de sous-titre de remplacement, activé à partir dudit au moins un instant de décrochage audio ou de sous-titre,

  délivrant un flux modifié identique audit flux d'origine en terme de structure et de nombre de paquets, mais dont le contenu est modifié,
  ledit module de remplacement comprenant :

  pour le remplacement d'au moins un paquet vidéo à remplacer dudit contenu principal, un premier compteur représentatif d'un nombre de paquets entre deux paquets vidéo de remplacement du contenu secondaire à une valeur nulle, et une première variable représentative d'un nombre de paquets avant le prochain paquet vidéo à remplacer à la valeur d'une variable de ratio vidéo cumulée, définie à partir dudit ratio vidéo,
  pour le remplacement d'au moins un paquet audio ou de sous-titre à remplacer dudit contenu principal, un deuxième compteur représentatif d'un nombre de paquets entre deux paquets audio ou de sous-titre de remplacement du contenu secondaire à une valeur nulle, et
  une deuxième variable représentative d'un nombre de paquets avant le prochain paquet audio ou de sous-titre à remplacer à la valeur d'une variable de ratio audio ou de sous-titre cumulée, définie à partir dudit ratio audio ou de sous-titre,

- un module (78) de mise à jour, dans ledit flux modifié :

  ◦ d'une horloge de référence,
  ◦ d'un compteur de continuité de paquets vidéo et d'au moins une information temporelle de reconstruction vidéo dans le ou lesdits paquets vidéo de remplacement, et
  ◦ d'un compteur de continuité de paquets audio ou de sous-titre et d'au moins une information temporelle de reconstruction audio ou de sous-titre dans le ou lesdits paquets audio ou de sous-titre de remplacement, tenant compte de ladite au moins une information temporelle de reconstruction vidéo.

**17.** Programme d'ordinateur comportant des instructions pour la mise en œuvre d'un procédé de remplacement de contenus selon la revendication 1 lorsque ce programme est exécuté par un processeur.

**Patentansprüche**

**1.** Verfahren zum Ersetzen eines Hauptinhalts durch mindestens einen sekundären Inhalt, wobei der Hauptinhalt durch einen als Ursprungsstrom bezeichneten Transportstrom übertragen wird, der von einem stationären Sender kommt und für eine Mehrzahl von Übertragungsstandorten bestimmt ist,

**dadurch gekennzeichnet, dass** es die folgenden Schritte an mindestens einer Vorrichtung zum Ersetzen von Inhalten umsetzt, welche mindestens einem der Übertragungsstandorte zugeordnet ist:

- Empfang des Ursprungsstroms,
- Festlegung (21) eines Zeitpunkts eines Videoabbruchs und mindestens eines Zeitpunkts eines Audio- oder Untertitelabbruchs ausgehend von mindestens einem Abbruchspaket des Ursprungsstroms,
- Festlegung eines als Video-Verhältnis bezeichneten Verhältnisses zwischen dem Durchsatz des Ursprungsstroms und dem Videodurchsatz des sekundären Inhalts,
- Festlegung eines als Audio-Verhältnis bezeichneten Verhältnisses zwischen dem Durchsatz des Ursprungsstroms und dem Audiodurchsatz des sekundären Inhalts und/oder eines als Untertitel-Verhältnis bezeichneten Verhältnisses zwischen dem Durchsatz des Ursprungsstroms und dem Untertiteldurchsatz des sekundären Inhalts,
- in dem Ursprungsstrom Ersetzen (22) von:

   o mindestens einem Videopaket des Hauptinhalts, das als zu ersetzendes Videopaket bezeichnet wird, durch mindestens ein Videopaket des sekundären Inhalts oder durch ein Null-Paket, das als Video-Ersatzpaket bezeichnet wird, ausgehend von dem Zeitpunkt eines Videoabbruchs und
   o mindestens einem Audio- oder Untertitelpaket des Hauptinhalts, das als zu ersetzendes Audio- oder Untertitelpaket bezeichnet wird, durch mindestens ein Audio- oder Untertitelpaket des sekundären Inhalts oder durch ein Null-Paket, das als Audio- oder Untertitel-Ersatzpaket bezeichnet wird, ausgehend von dem mindestens einen Zeitpunkt eines Untertitel- oder Audioabbruchs,

ausgebend einen modifizierten Strom, der hinsichtlich der Struktur und der Paketanzahl identisch mit dem Ursprungsstrom ist, dessen Inhalt jedoch modifiziert ist, wobei der Schritt des Ersetzens die folgenden Unterschritte umsetzt:

   für das Ersetzen mindestens eines zu ersetzenden Videopakets des Hauptinhalts:

   - Initialisierung eines ersten Zählers, der für eine Anzahl von Paketen zwischen zwei Video-Ersatzpaketen des sekundären Inhalts repräsentativ ist, auf einen Nullwert und einer ersten Variable, die für eine Anzahl von Paketen vor dem nächsten zu ersetzenden Videopaket repräsentativ ist, auf einen Wert einer kumulierten Video-Verhältnis-Variable und aufgrund des Video-Verhältnisses definiert ist,
   - bei jedem zu ersetzenden Videopaket des Ursprungsstroms:

      ◦ Inkrementierung des ersten Zählers,
      ◦ Ersetzen des zu ersetzenden Videopakets durch eines der Videopakete des sekundären Inhalts, wenn der Wert des ersten Zählers größer oder gleich dem Wert der ersten Variable ist,
      ◦ ansonsten Ersetzen des zu ersetzenden Videopakets durch ein Null-Paket,
      ◦ Aktualisierung der ersten Variable;

   für das Ersetzen mindestens eines zu ersetzenden Audio- oder Untertitelpakets des Hauptinhalts:

   - Initialisierung eines zweiten Zählers, der für eine Anzahl von Paketen zwischen zwei Audio- oder Untertitel-Ersatzpaketen des sekundären Inhalts repräsentativ ist, auf einen Nullwert und einer zweiten Variable, die für eine Anzahl von Paketen vor dem nächsten zu ersetzenden Audio- oder Untertitelpaket mit dem Wert einer Variable für kumuliertes Audio- oder Untertitel-Verhältnis repräsentativ ist und aufgrund des Audio- oder Untertitel-Verhältnisses definiert ist,
   - bei jedem zu ersetzenden Audio- oder Untertitelpaket des Ursprungsstroms:

      ◦ Inkrementierung des zweiten Zählers,
      ◦ Ersetzen des zu ersetzenden Audio- oder Untertitelpakets durch eines der Audio- oder Untertitelpakete des sekundären Inhalts, wenn der Wert des zweiten Zählers größer oder gleich dem Wert der zweiten Variable ist,
      ◦ ansonsten Ersetzen des zu ersetzenden Audiopakets durch ein Null-Paket,
      ◦ Aktualisierung der zweiten Variable,

- in dem modifizierten Strom Aktualisierung (23):

  ◦ eines Referenztaktes,
  ◦ eines Durchgangszählers von Videopaketen und mindestens einer Zeitinformation über Videorekonstruktion in dem oder den Video-Ersatzpaketen und
  ◦ eines Durchgangszählers von Audio- oder Untertitelpaketen und mindestens einer Zeitinformation über Audio- oder Untertitelrekonstruktion in dem oder den Audio- oder Untertitel-Ersatzpaketen unter Berücksichtigung der mindestens einen Videorekonstruktions-Zeitinformation.

2. Verfahren für das Ersetzen nach Anspruch 1, **dadurch gekennzeichnet, dass** der Schritt der Festlegung eines Zeitpunkts eines Videoabbruchs und mindestens eines Zeitpunkts eines Audio- oder Untertitelabbruchs folgende Unterschritte umsetzt:

  - Detektion eines ersten kodierten Referenzbildes in einem Paket, das auf das Abbruchspaket (52) in dem Ursprungsstrom folgt,
  - Gewinnung einer dem ersten Referenzbild zugeordneten Zeitinformation über ein Auftreten eines Abbruchs, wodurch der Zeitpunkt des Videoabbruchs ausgegeben wird,
  - Vergleich der Zeitinformation über ein Auftreten eines Abbruchs mit einer Zeitinformation der Audio- oder Untertitelpaket-Wiedergabe von mindestens einem Audio- oder Untertitelpakets des Ursprungsstroms,
  - wenn die einem Audio- oder Untertitelpaket des Ursprungsstroms, genannt erstes zu ersetzendes Audio- oder Untertitelpaket, zugeordnete Zeitinformation über ein Audio- oder Untertitelwiedergabe größer oder gleich der Zeitinformation über ein Auftreten eines Abbruchs ist: Zuordnung der dem ersten zu ersetzenden Audio- oder Untertitelpaket zugeordneten Zeitinformation über eine Audio- oder Untertitelwiedergabe zu mindestens einem Zeitpunkt des Audio- oder Untertitelabbruchs.

3. Verfahren für das Ersetzen nach Anspruch 1, **dadurch gekennzeichnet, dass** der Schritt der Festlegung eines Zeitpunkts eines Videoabbruchs und mindestens eines Zeitpunkts eines Audio- oder Untertitelabbruchs folgende Unterschritte umsetzt:

  - Gewinnung einer dem Ursprungsstrom zugeordneten Zeitinformation über ein Auftreten eines Abbruchs aus dem Abbruchspaket,
  - Vergleich der Zeitinformation über ein Auftreten eines Abbruchs mit einer mindestens einem Videopaket des Ursprungsstroms zugeordneten Zeitinformation über eine Videowiedergabe,
  - wenn die Zeitinformation über ein Auftreten eines Abbruchs und die einem Videopaket des Ursprungsstroms, genannt erstes zu ersetzendes Videopaket, zugeordnete Zeitinformation über eine Videowiedergabe identisch sind: Zuordnung der dem ersten zu ersetzenden Videopaket zugeordneten Zeitinformation über eine Videowiedergabe zu dem Zeitpunkt eines Videoabbruchs,
  - Vergleich der Zeitinformation über ein Auftreten eines Abbruchs mit einer mindestens einem Audio- oder Untertitelpaket des Ursprungsstroms zugeordneten Zeitinformation über eine Audio- oder Untertitelwiedergabe,
  - wenn die einem Audio- oder Untertitelpaket des Ursprungsstroms, genannt erstes zu ersetzendes Audio- oder Untertitelpaket, zugeordnete Zeitinformation über eine Audio- oder Untertitelwiedergabe größer oder gleich der Zeitinformation über ein Auftreten eines Abbruchs ist: Zuordnung der dem ersten zu ersetzenden Audio- oder Untertitelpaket zugeordneten Zeitinformation über eine Audio- oder Untertitelwiedergabe zu dem mindestens einen Zeitpunkt eines Audio- oder Untertitelabbruchs.

4. Verfahren für das Ersetzen nach einem beliebigen der Ansprüche 1 bis 3, **dadurch gekennzeichnet, dass** der Schritt der Aktualisierung eines Referenztakts die folgende Formel umsetzt:

$$PCR(n) = PCR(n - 1) + \text{Anzahl der Pakete zwischen zwei Paketen PCR} * pas\ PCR$$

wobei

PCR(n) der Referenztakt des i-ten Pakets mit einem Referenztakt, $n \geq 1$, ist,
PCR(O) der Wert des Referenztakts des letzten Pakets mit einem Referenztakt des Ursprungsstroms vor dem ersten Video-Ersatzpaket ist und
des "pas PCR" der Dauer eines Pakets des Ursprungsstroms entspricht.

5. Verfahren für das Ersetzen nach einem beliebigen der Ansprüche 1 bis 4, **dadurch gekennzeichnet, dass** der Schritt der Aktualisierung eines Durchgangszählers von Videopaketen und mindestens einer Videorekonstruktions-Zeitinformation folgende Unterschritte umsetzt:

- für die Aktualisierung des Durchgangszählers von Videopaketen:

   o Initialisierung des Durchgangszählers des ersten Video-Ersatzpakets mit dem Wert des Durchgangszählers des letzten Videopakets des Ursprungsstroms vor dem ersten Video-Ersatzpaket plus Eins;
   o Aktualisierung des Durchgangszählers der anderen Video-Ersatzpakete gemäß der folgenden Formel:

$$CC\ Video(n) = (CC\ Video(n-1)+1)\ modulo\ 16$$

   wobei CC *Video (n)* der Durchgangszähler des i-ten Video-Ersatzpakets, $n > 1$, ist;

- für die Aktualisierung der mindestens einen Videorekonstruktions-Zeitinformation:

   ◦ für die Aktualisierung einer Videodekodierungszeitinformation:

      • für das erste, zu einem ersten sekundären Inhalt gehörende Video-Ersatzpaket, Initialisierung der Videodekodierungszeitinformation des ersten Video-Ersatzpakets mit dem Wert einer Videodekodierungszeitinformation des ersten ersetzten Videopakets;
      • für das erste, zu einem anderen sekundären Inhalt gehörende Video-Ersatzpaket, Initialisierung der Videodekodierungszeitinformation des ersten Video-Ersatzpakets gemäß der Formel:

$$DTS\ eingef\ddot{u}gtes\ Video(n)$$
$$= (DTS\ eingef\ddot{u}gtes\ Video(n-1)$$
$$+ \Delta DTS\ Video(n-1))\ modulo\ 2^{33}$$

      wobei
      *DTS eingefügtes Video (n)* der Wert der Videodekodierungszeitinformation des i-ten Pakets mit einer Videodekodierungszeitinformation unter den Video-Ersatzpaketen des modifizierten Stroms ist,

$$\Delta DTS\ Video(n-1)$$
$$= DTS\ eingef\ddot{u}gtes\ Video(n-1) - DTS\ eingef\ddot{u}gtes\ Video(n-2),$$

      • Aktualisierung der Videodekodierungszeitinformation der anderen Video-Ersatzpakete gemäß der Formel :

$$DTS\ eingef\ddot{u}gtes\ Video(n)$$
$$= (DTS\ eingef\ddot{u}gtes\ Video(n-1)$$
$$+ (DTS\ Video\ cont\ sec(n)$$
$$- DTS\ Video\ cont\ sec(n-1)))\ modulo\ 2^{33}$$

      wobei
      *DTS Video cont sec (n)* der Wert der Videodekodierungszeitinformation des i-ten Pakets mit einer Videodekodierungszeitinformation unter den Videopaketen des sekundären Inhalts ist,

   o für die Aktualisierung einer Zeitinformation über eine Videowiedergabe:

• Aktualisierung der Zeitinformation über eine Videowiedergabe der Video-Ersatzpakete gemäß der folgenden Formel:

$$PTS\ eingef\ddot{u}gtes\ Video(n)$$
$$= (DTS\ eingef\ddot{u}gtes\ Video(n)$$
$$+ (PTS\ Video\ cont\ sec(n)$$
$$- DTS\ Video\ cont\ sec(n))) \ modulo\ 2^{33}$$

wobei

*PTS eingefügtes Video (n)* der Wert der Zeitinformation über eine Videowiedergabe des i-ten Pakets mit einer Zeitinformation über ein Videowiedergabe unter den Video-Ersatzpaketen des modifizierten Stroms ist,
*PTS Video cont sec (n)* der Wert der Zeitinformation über eine Videowiedergabe des i-ten Pakets mit einer Zeitinformation über eine Videowiedergabe unter den Video-Paketen des sekundären Inhalts ist.

6.  Verfahren für das Ersetzen nach einem beliebigen der Ansprüche 1 bis 5, **dadurch gekennzeichnet, dass** der Schritt der Aktualisierung eines Durchgangszählers von Audio- oder Untertitelpaketen und mindestens einer Audio- oder Untertitelrekonstruktionszeitinformation die folgenden Unterschritte umsetzt:

- für die Aktualisierung des Durchgangszählers von Audio- oder Untertitelpaketen:

◦ Initialisierung des Durchgangszählers des ersten Audio- oder Untertitel-Ersatzpakets mit dem Wert des Durchgangszählers des letzten Audio- oder Untertitelpakets des Ursprungsstroms vor dem ersten Audio- oder Untertitel-Ersatzpaket plus Eins;
◦ Aktualisierung des Durchgangszählers der anderen Audio- oder Untertitel-Ersatzpakete gemäß der folgenden Formel:

$$CC\ comp(n) = (CC\ comp(n - 1) + 1)\ modulo\ 16$$

wobei *CC comp (n)* der Audio- oder Untertitel-Durchgangszähler des i-ten Audio- oder Untertitel-Ersatzpaket, *n* > 1, ist;

- für die Aktualisierung der mindestens einen Audio- oder Untertitelrekonstruktionszeitinformation:

◦ für das erste, zu einem ersten sekundären Inhalt gehörende Audio- oder Untertitel-Ersatzpaket, Initialisierung einer Zeitinformation über eine Audio- oder Untertitelwiedergabe des ersten Audio- oder Untertitel-Ersatzpakets mit dem Wert einer Zeitinformation über ein Audio- oder Untertitelwiedergabe des ersten ersetzten Audio- oder Untertitelpakets;
◦ für das erste, zu einem anderen sekundären Inhalt gehörende Audio- oder Untertitel-Ersatzpaket, Initialisierung der Zeitinformation über eine Audio- oder Untertitelwiedergabe des ersten Audio- oder Untertitel-Ersatzpakets gemäß der Formel:

$$PTS\ comp\ eingef\ddot{u}gt(n)$$
$$= (PTS\ comp\ eingef\ddot{u}gt(n - 1) + \Delta PTS\ comp(n - 1))$$
$$modulo\ 2^{33}$$

wobei
*PTS comp eingefügt (n)* der Wert der Zeitinformation über eine Audio- oder Untertitelwiedergabe des i-ten Pakets mit einer Zeitinformation über eine Audio- oder Untertitelwiedergabe unter den Audio- oder Untertitel-Ersatzpaketen des modifizierten Stroms ist,

$$\Delta PTS\ comp(n-1) = PTS\ comp\ eingefügt(n-1) - PTS\ comp\ eingefügt(n-2)$$

◦ Aktualisierung der Zeitinformation über eine Audio- oder Untertitelwiedergabe der anderen Audio- oder Untertitel-Ersatzpakete gemäß der Formel :

$$PTS\ comp\ eingefügt(n)$$
$$= (PTS\ comp\ eingefügt(n-1)$$
$$+ (PTS\ comp\ cont\ sec(n)$$
$$- PTS\ comp\ cont\ sec(n-1)))\ modulo\ 2^{33}$$

wobei
*PTS comp cont sec (n)* der Wert der Zeitinformation über eine Audio- oder Untertitelwiedergabe des i-ten Pakets mit einer Zeitinformation über eine Audio- oder Untertitelwiedergabe unter den Audio- oder Untertitelpaketen des sekundären Inhalts ist.

7. Verfahren für das Ersetzen nach einem beliebigen der Ansprüche 1 bis 6, **dadurch gekennzeichnet, dass** es ferner einen Schritt der Festlegung eines Video-Rückführungszeitpunkts und mindestens eines Audio- oder Untertitel-Rückführungszeitpunkts ausgehend von einem Rückführungspaket (58) des modifizierten Stroms umfasst.

8. Verfahren für das Ersetzen nach Anspruch 7, **dadurch gekennzeichnet, dass** der Schritt der Festlegung eines Video-Rückführungszeitpunkts und mindestens eines Audio- oder Untertitel-Rückführungszeitpunkts die folgenden Unterschritte umsetzt:

   - Detektion eines zweiten kodierten Referenzbildes in einem Paket, das auf das Rückführungspaket in dem modifizierten Strom folgt,
   - Gewinnung einer dem zweiten Referenzbild zugeordneten Zeitinformation über ein Rückführungsauftreten, wodurch der Video-Rückführungszeitpunkt ausgegeben wird,
   - Vergleich der Zeitinformation über ein Rückführungsauftreten mit einer mindestens einem Audio- oder Untertitelpaket des modifizierten Stroms zugeordneten Zeitinformation über eine Audio- oder Untertitelwiedergabe,
   - wenn die einem Audio- oder Untertitelpaket des modifizierten Stroms, genannt erstes Audio- oder Untertitel-Rückführungspaket, zugeordnete Zeitinformation über eine Audio- oder Untertitelwiedergabe größer oder gleich einer geschätzten Zeitinformation über ein Audio- oder Untertitel-Rückführungsauftreten ist, die aufgrund der Zeitinformation über ein Rückführungsauftreten und der Video- und Audio- oder Untertitel-Ersatzpakete in dem modifizierten Strom bestimmt wird: Zuordnung der dem ersten Audio- oder Untertitel-Rückführungspaket zugeordneten Zeitinformation über eine Audio- oder Untertitelwiedergabe zu mindestens einem Audio- oder Untertitel-Rückführungszeitpunkt.

9. Verfahren für das Ersetzen nach Anspruch 7, **dadurch gekennzeichnet, dass** der Schritt der Festlegung eines Video-Rückführungszeitpunkts und mindestens eines Audio- oder Untertitel-Rückführungszeitpunkts die folgenden Unterschritte umsetzt:

   - Gewinnung einer dem modifizierten Strom zugeordneten Zeitinformation über ein Rückführungsauftreten aus dem Rückführungspaket,
   - Vergleich der Zeitinformation über ein Rückführungsauftreten mit einer mindestens einem Videopaket des modifizierten Stroms zugeordneten Zeitinformation über eine Videowiedergabe,
   - wenn die Zeitinformation über ein Rückführungsauftreten und die einem Videopaket des modifizierten Stroms, genannt erstes Video-Rückführungspaket, zugeordnete Zeitinformation über eine Videowiedergabe identisch sind: Zuordnung der dem ersten Video-Rückführungspaket zugeordneten Zeitinformation über eine Videowiedergabe zu dem Video-Rückführungszeitpunkt,
   - Vergleich der Zeitinformation über ein Rückführungsauftreten mit einer mindestens einem Audio- oder Untertitelpaket des modifizierten Stroms zugeordneten Zeitinformation über eine Audio- oder Untertitelwiedergabe,
   - wenn die einem Audio- oder Untertitelpaket des modifizierten Stroms, genannt erstes Audio- oder Untertitel-Rückführungspaket, zugeordnete Zeitinformation über eine Audio- oder Untertitelwiedergabe größer oder gleich einer geschätzten Zeitinformation über ein Audio- oder Untertitel-Rückführungsauftreten ist, die aufgrund der Zeitinformation über ein Rückführungsauftreten und der Video- und Audio- oder Untertitel-Ersatzpakete des modifizierten Stroms bestimmt wird: Zuordnung der dem ersten Audio- oder Untertitel-Rückführungspaket zugeordneten Zeitinformation über eine Audio- oder Untertitelwiedergabe zu dem mindestens einen Audio- oder Untertitel-Rückführungszeitpunkt.

10. Verfahren für das Ersetzen nach einem beliebigen der Ansprüche 8 und 9, **dadurch gekennzeichnet, dass** die geschätzte Zeitinformation über ein Audio- oder Untertitel-Rückführungsauftreten wie folgt bestimmt wird:

$$PTS\ comp\ live\ geschätzte\ Rückführung = PTS\ retour + \Delta PTS\ comp\ eingefügtes\ Video$$

wobei

$$\Delta PTS\ comp\ eingefügtes\ Video = PTS\ comp\ eingefügt(0) - PTS\ eingefügtes\ Video(0)$$

*PTS Rückführung* die Zeitinformation über ein Rückführungsauftreten ist,
*PTS comp eingefügt(0)* die Zeitinformation über eine Audio- oder Untertitelwiedergabe des ersten Audio- oder Untertitel-Ersatzpakets ist,
*PTS eingefügtes Video(0)* die Zeitinformation über eine Videowiedergabe des ersten Video-Ersatzpakets ist.

11. Verfahren für das Ersetzen nach einem beliebigen der Ansprüche 1 bis 10, **dadurch gekennzeichnet, dass**:

- wenn die Anzahl von zu dem mindestens einem sekundären Inhalt gehörenden Bildern geringer als die Anzahl von zu dem zu ersetzenden Hauptinhalt gehörenden Bildern ist, alle zu dem mindestens einem sekundären Inhalt gehörenden Bilder in den modifizierten Strom eingefügt werden und die Rückführung zu dem Ursprungsstrom erfolgt, wenn eine Videodekodierungszeitinformation eines Videopakets des modifizierten Stroms größer als die Videodekodierungszeitinformation des letzten Video-Ersatzpakets des modifizierten Stroms ist;
- wenn die Anzahl von zu dem mindestens einen sekundären Inhalt gehörenden Bildern größer als die Anzahl von zu dem zu ersetzenden Hauptinhalt gehörenden Bildern ist, die zu dem mindestens einen sekundären Inhalt gehörenden Bilder in den modifizierten Strom eingefügt werden, solange die Videodekodierungszeitinformation der Video-Ersatzpakete kleiner ist als eine geschätzte Zeitinformation über eine Videodekodierungs-Rückführung.

12. Verfahren für das Ersetzen nach Anspruch 11, **dadurch gekennzeichnet, dass** die geschätzte Zeitinformation über eine Videodekodierungs-Rückführung wie folgt bestimmt wird:

$$DTS\ Video\ live\ geschätzte\ Rückführung = PTS\ Rückführung + \Delta PTS/DTS\ eingefügtes\ Video$$

wobei

$$\Delta PTS/DTS\ eingefügtes\ Video = PTS\ eingefügtes\ Video(0) - DTS\ eingefügtes\ Video\ (0)$$

*PTS Rückführung* die Zeitinformation über ein Rückführungsauftreten ist,
*PTS eingefügtes Video(0)* die Zeitinformation über eine Videowiedergabe des ersten Video-Ersatzpakets ist und
*DTS eingefügtes Video(0)* die Videodekodierungszeitinformation des ersten Video-Ersatzpakets ist.

13. Verfahren für das Ersetzen nach einem beliebigen der Ansprüche 1 bis 12, **dadurch gekennzeichnet, dass**:

- wenn die Anzahl von zu dem mindestens einen sekundären Inhalt gehörenden Audio- oder Untertitel-Frames geringer als die Anzahl von zu dem zu ersetzenden Hauptinhalt gehörenden Audio- oder Untertitel-Frames ist, alle zu dem mindestens einen sekundären Inhalt gehörenden Audio- oder Untertitel-Frames in den modifizierten Strom eingefügt werden und die Rückführung zu dem Ursprungsstrom erfolgt, wenn eine Zeitinformation über eine Audio- oder Untertitelwiedergabe eines Audio- oder Untertitelpakets des modifizierten Stroms größer ist als die Zeitinformation über eine Audio- oder Untertitelwiedergabe des letzten Audio- oder Untertitel-Ersatzpakets des modifizierten Stroms;

- wenn die Anzahl von zu dem mindestens einen sekundären Inhalt gehörenden Audio- oder Untertitel-Frames größer als die Anzahl von zu dem zu ersetzenden Hauptinhalt gehörenden Audio- oder Untertitel-Frames ist, die zu dem mindestens einen sekundären Inhalt gehörenden Audio- oder Untertitel-Frames in den modifizierten Strom eingefügt werden, solange die Zeitinformation über eine Audio- oder Untertitelwiedergabe der Audio- oder Untertitel-Ersatzpakete kleiner als eine geschätzte Zeitinformation über ein Audio- oder Untertitel-Rückführungsauftreten ist.

14. Verfahren für das Ersetzen nach einem beliebigen der Ansprüche 7 bis 10, **dadurch gekennzeichnet, dass** nach dem letzten Video-Ersatzpaket des modifizierten Stroms und vor dem Video-Rückführungszeitpunkt, wenn ein Paket mit einem Referenztakt detektiert wird, das Paket mit einem Referenztakt modifiziert wird, um lediglich ein Feld für die Anpassung des Referenztakts in dem modifizierten Strom zu behalten.

15. Verfahren für das Ersetzen nach einem beliebigen der Ansprüche 1 bis 14, **dadurch gekennzeichnet, dass** es einen Schritt des Einfügens von mindestens einem Füllpaket in den modifizierten Strom umfasst, wenn die Anzahl von zu dem mindestens einen sekundären Inhalt gehörenden Video- bzw. Audio- oder Untertitelpaketen kleiner als die Anzahl von zu dem zu ersetzenden Hauptinhalt gehörenden Video- bzw. Audio- oder Untertitelpaketen ist.

16. Vorrichtung für das Ersetzen eines Hauptinhalts durch mindestens einen sekundären Inhalt, wobei der Hauptinhalt von einem als Ursprungsstrom bezeichneten Transportstrom übertragen wird, der von einem stationären Sender kommt und für eine Mehrzahl von Übertragungsstandorten bestimmt ist, **dadurch gekennzeichnet, dass** die Vorrichtung zu mindestens einem der Übertragungsstandorte zugeordnet ist und umfasst:

- ein Modul für den Empfang des Ursprungsstroms,
- ein Modul (74) für die Festlegung eines Zeitpunktes eines Videoabbruchs und mindestens eines Zeitpunkts eines Audio- oder Untertitelabbruchs ausgehend von mindestens einem Abbruchspaket des Ursprungsstroms,
- ein Modul (75) für die Festlegung eines als Video-Verhältnis bezeichneten Verhältnisses zwischen dem Durchsatz des Ursprungsstroms und dem Videodurchsatz des sekundären Inhalts,
- ein Modul (76) für die Festlegung eines als Audio-Verhältnis bezeichneten Verhältnisses zwischen dem Durchsatz des Ursprungsstroms und dem Audiodurchsatz des sekundären Inhalts und/oder eines als Untertitel-Verhältnis bezeichneten Verhältnisses zwischen dem Durchsatz des Ursprungsstroms und dem Untertitel-Durchsatz des sekundären Inhalts,
- ein Modul (77), um in dem Ursprungsstrom zu ersetzen:

  ◦ mindestens ein Videopaket des Hauptinhalts, genannt zu ersetzendes Videopaket, durch mindestens ein Videopaket des sekundären Inhalts oder durch ein Null-Paket, genannt Video-Ersatzpaket, ausgehend von dem Zeitpunkt eines Videoabbruchs aktiviert, und
  ◦ mindestens ein Audio- oder Untertitelpaket des Hauptinhalts, genannt zu ersetzendes Audio- oder Untertitelpaket, durch mindestens ein Audio- oder Untertitelpaket des sekundären Inhalts oder durch ein Null-Paket, genannt Audio- oder Untertitel-Ersatzpaket, ausgehend von dem mindestens einem Zeitpunkt eines Audio- oder Untertitelabbruchs aktiviert,

ausgebend einen modifizierten Strom, der identisch ist mit dem Ursprungsstrom hinsichtlich der Struktur und der Paketanzahl, aber mit modifiziertem Inhalt, wobei das Modul für das Ersetzen umfasst:

für das Ersetzen von mindestens einem zu ersetzenden Videopaket des Hauptinhalts einen ersten Zähler, der für eine Anzahl von Paketen zwischen zwei Video-Ersatzpaketen des sekundären Inhalts repräsentativ ist, mit einem Nullwert und eine erste Variable, die für eine Anzahl von Paketen vor dem nächsten zu ersetzenden Videopaket repräsentativ ist, mit dem Wert einer Variable für kumuliertes Video-Verhältnis das aufgrund des Video-Verhältnisses definiert ist, für das Ersetzen von mindestens einem zu ersetzenden Audio- oder Untertitelpaket des Hauptinhalts einen zweiten Zähler, der für eine Anzahl von Paketen zwischen zwei Audio- oder Untertitel-Ersatzpaketen des sekundären Inhalts repräsentativ ist mit einem Nullwert, und
eine zweiten Variable, die für eine Anzahl von Paketen vor dem nächsten zu ersetzenden Audio- oder Untertitelpaket repräsentativ ist mit dem Wert einer kumulierten Audio- oder Untertitel-Verhältnis-Variable , das ausgehend von dem Audio- oder Untertitel-Verhältnis definiert ist,

- ein Modul (78), um in dem modifizierten Strom zu aktualisieren:

◦ einen Referenztakt,
einen Durchgangszähler von Videopaketen und mindestens einer Zeitinformation über Videorekonstruktion in dem oder den Video-Ersatzpaketen und
◦ einen Durchgangszähler von Audio- oder Untertitelpaketen und mindestens einer Zeitinformation über Audio- oder Untertitelrekonstruktion in dem oder den Audio- oder Untertitel-Ersatzpaketen unter Berücksichtigung der mindestens einen Videorekonstruktions-Zeitinformation.

17. Computerprogramm mit Befehlen für das Umsetzen eines Verfahrens für das Ersetzen von Inhalten nach Anspruch 1, wenn dieses Programm durch einen Prozessor ausgeführt wird.

**Claims**

1. A method of replacement of a main content by at least one secondary content, said main content being carried by a transport stream, issued by a fixed transmitter and addressed to a plurality of broadcasting sites, called an original stream,
**characterized in that** it implements the following steps, in at least one device for replacing contents associated with at least one of said broadcasting sites,

- receiving said original stream,
- determining (21) an instant of video breaking and at least one instant of audio or subtitle breaking, on the basis of at least one breaking packet of said original stream,
- determining a ratio between the bit rate of said original stream and the video bit rate of said secondary content, called a video ratio,
- determining a ratio between the bit rate of said original stream and the audio bit rate of said secondary content, called an audio ratio, and/or a ratio between the bit rate of said original stream and the subtitle bit rate of said secondary content, called a subtitle ratio,
- replacing (22) in said original stream:

◦ at least one video packet of said main content, called a video packet to be replaced, by at least one video packet of said secondary content or by a null packet, called a replacement video packet, starting from said video breaking instant, and
◦ at least one audio packet or subtitle packet of said main content, called an audio packet or subtitle packet to be replaced, by at least one audio packet or subtitle packet of said secondary content or by a null packet, called a replacement audio packet or subtitle packet starting from said at least one audio or subtitle breaking instant,

delivering a modified stream that is identical to the original stream in terms of structure and number of packets, but has its contents modified,
said step of replacing implementing the following sub-steps:

for the replacement of at least one video packet to be replaced of said main content:

- initialization of a first counter representing a number of packets between two replacement video packets of the secondary content at a null value and of a first variable representing a number of packets before the next video packet to be replaced at the value of a cumulative video ratio variable defined on the basis of said video ratio,
- at each video packet to be replaced of said original stream:

o incrementing of said first counter,

o replacement of said video packet to be replaced by one of said video packets of the secondary content when the value of said first counter is greater than or equal to the value of said first variable,
o replacement of said video packet to be replaced by a null packet, else,
o updating of said first variable;

for the replacement of at least one audio packet or subtitle packet to be replaced of said main content:

- initialization of a second counter representing a number of packets between two replacement audio packets or subtitle packets of the secondary content at a null value, and of a second variable representing a number of packets before the next audio packet or subtitle packet to be replaced at the value of a cumulative variable of audio ratio or subtitle ratio defined on the basis of said audio or subtitle ratio,
- at each audio packet or subtitle packet to be replaced of said original stream:

o incrementing of said second counter,
o replacement of said audio packet or subtitle packet to be replaced by one of said audio or subtitle packets of the secondary content when the value of said second counter is greater than or equal to the value of said second variable,
o replacement of said audio packet to be replaced with a null packet, else,
o updating of said second variable,

- updating (23), in said modified stream:

o a reference clock,
o a continuity counter of video packets and at least one video reconstruction temporal information in said replacement video packet or packets, and
o a continuity counter of audio packets or subtitle packets and at least one audio or subtitle reconstruction temporal information in said replacement audio or subtitle packet or packets, taking account of said at least one video reconstruction temporal information.

2. The method of replacement according to claim 1, **characterized in that** said step of determining an instant of a video breaking and at least one instant of audio or subtitle breaking implements the following sub-steps:

- detection of a first reference image encoded in a packet following said breaking packet (52) in said original stream,
- obtaining of a breaking presentation temporal information associated with said first reference image, delivering said instant of video breaking,
- comparison of said breaking presentation temporal information with an audio or subtitle presentation temporal information associated with at least one audio packet or subtitle packet of the original stream,
- when said audio or subtitle presentation temporal information associated with an audio packet or subtitle packet of said original stream, called a first audio packet or subtitle packet to be replaced, is greater than or equal to said breaking presentation temporal information : assigning of said audio or subtitle presentation temporal information associated with said first audio packet or subtitle packet to be replaced to said at least one instant of audio or subtitle breaking.

3. The method of replacement according to claim 1, **characterized in that** said step of determining an instant of video breaking and at least one instant of audio or subtitle breaking implements the following sub-steps:

- obtaining, from said breaking packet, of a breaking presentation temporal information associated with said original stream,
- comparison of said breaking presentation temporal information with a video presentation temporal information associated with at least one video packet of said original stream,
- when said breaking presentation temporal information and said video presentation temporal information associated with a video packet of said original stream, called a first video packet to be replaced, are identical: assigning of said video presentation temporal information, associated with the first video packet to be replaced, to said instant of video breaking,
- comparison of said breaking presentation temporal information with an audio or subtitle presentation temporal information associated with at least one audio packet or subtitle packet of said original stream,
- when said audio or subtitle presentation temporal information associated with an audio packet or subtitle packet of said original stream, called a first audio packet or subtitle packet to be replaced, is greater than or equal to said breaking presentation temporal information : assigning said audio or subtitle presentation temporal information, associated with the first audio packet or subtitle packet to be replaced, to said at least one instant of audio or subtitle breaking.

4. The method of replacement according to any one of the claims 1 to 3, **characterized in that** said step of updating a reference clock implements the following formula:

$$PCR(n) = PCR(n-1) + number\ of\ packets\ between\ two\ PCR\ packets * PCR\ pitch$$

with:

$PCP(n)$ the reference clock of the nth packet carrying a reference clock, $n \geq 1$,
$PCP(0)$ the value of the reference clock of the last packet carrying a reference clock of said original stream before said first replacement video packet, and
PCR pitch corresponds to the duration of a packet of said original stream.

5. The method of replacement according to any one of the claims 1 to 4, **characterized in that** said step of updating a continuity counter of video packets and at least a video reconstruction temporal information implements the following sub-steps:

- for the updating of said continuity counter of video packets:

  ◦ initialization of said continuity counter of the first replacement video packet at the value of the continuity counter of the last video packet of said original stream before said first replacement video packet plus one;
  ◦ updating said continuity counter of the other replacement video packets according to the following formula:

$$video\ CC\ (n) = (\ video\ CC\ (n-1) + 1)\ modulo\ 16$$

  with *video CC (n)* being the continuity counter of the nth replacement video packet, *n* > 1;

- for the updating said at least one video reconstruction temporal information:

  ◦ for the updating of a video decoding temporal information:

    ▪ for the first replacement video packet belonging to a first secondary content, initialization of the video decoding temporal information of the first replacement video packet at the value of a video decoding temporal information of the first video packet replaced;
    ▪ for the first replacement video packet belonging to another secondary content, initialization of the video decoding temporal information of the first replacement video packet according to the formula:

$$inserted\ video\ DTS\ (n)$$
$$= \big(inserted\ video\ DTS\ (n-1)$$
$$+ \Delta\ video\ DTS\ (n-1)\big)\ modulo\ 2^{33}$$

  with
  *inserted video DTS (n)* the value of the video decoding temporal information of the nth packet carrying a video decoding temporal information among said replacement video packets of said modified stream,

$$\Delta\ video\ DTS(n-1)$$
$$= inserted\ video\ DTS\ (n-1)$$
$$- inserted\ video\ DTS\ (n-2)$$

- updating the video decoding temporal information of the other replacement video packets according to the formula:

$$inserted\ video\ DTS\ (n)$$
$$= (inserted\ video\ DTS\ (n-1)$$
$$+ \big(sec\ cont\ video\ DTS\ (n)$$
$$- sec\ cont\ video\ DTS\ (n-1))\big)\ modulo\ 2^{33}$$

with
*sec cont video DTS* (*n*) the value of the video decoding temporal information of the nth packet carrying a video decoding temporal information among said video packets of said secondary content,

◦ for the updating of a video presentation temporal information :

- updating the video presentation temporal information of the replacement video packets according to the following formula:

$$inserted\ video\ PTS\ (n)$$
$$= (inserted\ video\ DTS\ (n)$$
$$+ (sec\ cont\ video\ PTS\ (n) - sec\ cont\ video\ DTS\ (n)\ ))\ modulo\ 2^{33}$$

with

*inserted video PTS* (*n*) being the value of video presentation temporal information of the nth packet carrying video presentation temporal information among said replacement video packets of said modified stream,
*sec cont video PTS* (*n*) being the value of video presentation temporal information of the nth packet carrying a video presentation temporal information among said video packets of said secondary content.

6. The method of replacement according to any one of the claims 1 to 5, **characterized in that** said first step of updating a continuity counter of audio packets or subtitle packets and of at least an audio or subtitle reconstruction temporal information implements the following sub-steps:

- for the updating of said continuity counter of audio or subtitle packets:

◦ initialization of said continuity counter of the first replacement audio packet or subtitle packet at the value of the continuity counter of the last audio packet or subtitle packet of said original stream before said first replacement audio packet or subtitle packet, plus one;
◦ updating of said continuity counter of the other replacement audio or subtitle packets according to the following formula:

$$CC\ count(n) = (CC\ count(n-1) + 1)\ modulo\ 16$$

with *CC count* (*n*) being the audio or subtitle continuity counter of the nth replacement audio packet or subtitle packet, n > 1;

- for the updating of said at least one audio or subtitle reconstruction temporal information:

  ∘ for the first replacement audio packet or subtitle packet belonging to a first secondary content, initialization of an audio or subtitle presentation temporal information of the first replacement audio packet or subtitle packet at the value of an audio or subtitle presentation temporal information of the first replaced audio packet or subtitle packet;
  ∘ for the first replacement audio packet or subtitle packet belonging to another secondary content, initialization of the audio or subtitle presentation temporal information of the first replacement audio packet or subtitle packet according to the formula:

$$inserted\ count\ PTS\ (n)$$
$$= (inserted\ count\ PTS\ (n-1)$$
$$+ \Delta\ count\ PTS(n-1)\ )\ modulo\ 2^{33}$$

with
*inserted count PTS*(*n*) being the value of the audio or subtitle presentation temporal information of the nth packet carrying an audio or subtitle presentation temporal information among said replacement audio or subtitle packets of said modified stream,

$$\Delta\ count\ PTS\ (n-1)$$
$$= inserted\ count\ PTS\ (n-1)\ - inserted\ count\ PTS\ (n-2)$$

  ∘ updating the audio or subtitle presentation temporal information of the other replacement audio or subtitle packets according to the formula:

$$inserted\ count\ PTS(n)$$
$$= (inserted\ count\ PTS(n-1)$$
$$+ (sec\ cont\ count\ PTS(n)$$
$$- sec\ cont\ countPTS(n-1)\ ))\ modulo\ 2^{33}$$

with
*sec cont count PTS*(*n*) being the value of the audio or subtitle presentation temporal information of the nth packet carrying an audio or subtitle presentation temporal information among said audio or subtitle packets of said secondary content.

7. The method of replacement according to any one of the claims 1 to 6, **characterized in that** it furthermore comprises a step of determining an instant of video return and at least one instant of audio or subtitle return, on the basis of a return packet (58) of said modified stream.

8. The method of replacement according to claim 7, **characterized in that** said step of determining an instant of video return and at least one instant of audio or subtitle return implements the following sub-steps:

  - detection of a second encoded reference image in a packet following said return packet in said modified stream,
  - obtaining of a return presentation temporal information associated with said second reference image, delivering said instant of video return,
  - comparison of said return presentation temporal information with an audio or subtitle presentation temporal information associated with at least one audio packet or subtitle packet of said modified stream,
  - when said audio or subtitle presentation temporal information associated with an audio packet or subtitle packet of the modified stream, called a first return audio packet or subtitle packet, is greater than or equal to an estimated return audio or subtitle presentation temporal information, determined from said return presentation temporal information and from said replacement video and audio or subtitle packets in said modified stream: assigning said audio or video presentation temporal information, associated with said first return audio packet or subtitle packet, to said at least one instant of audio or subtitle return.

**9.** The method of replacement according to claim 7, **characterized in that** said step of determining an instant of video return and at least one instant of audio or subtitle return implements the following sub-steps:

- obtaining, from said return packet, of a return presentation temporal information associated with said modified stream,
- comparison of said return presentation temporal information with a video presentation temporal information associated with at least one video packet of said modified stream,
- when said return presentation temporal information and said video presentation temporal information associated with a video packet of said modified stream, called a first return video packet, are identical: assigning said video presentation temporal information, associated with said first return video packet, to said instant of video return,
- comparison of said return presentation temporal information with an audio or subtitle presentation temporal information associated with at least one audio packet or subtitle packet of said modified stream,
- when said audio or subtitle presentation temporal information associated with an audio packet or subtitle packet of said modified stream, called a first return audio packet or subtitle packet, is greater than or equal to an estimated return subtitle or audio presentation temporal information, determined from said return presentation temporal information and from said replacement video and audio or subtitle packets of said modified stream: assigning said audio or subtitle presentation temporal information associated with said first return audio packet or subtitle packet to said at least one instant of audio or subtitle return.

**10.** The method of replacement according to any one of the claims 8 and 9, **characterized in that** said estimated audio or subtitle presentation temporal information is determined as follows:

$$estimated\ return\ live\ count\ PTS$$
$$= PTS\ time\ (end\ insertion) + \Delta inserted\ video\ count\ PTS$$

with:

$$\Delta\ inserted\ video\ count\ PTS = \ inserted\ count\ PTS(0) - inserted\ video\ PTS(0)$$

*PTS time* (*end insertion*) is said return presentation temporal information,
*inserted count PTS* (0) is said audio or video presentation temporal information of the first replacement audio packet or subtitle packet,
*inserted video PTS*(0) is said video presentation temporal information of the first replacement video packet.

**11.** The method of replacement according to any one of the claims 1 to 10, **characterizing in that**:

- if the number of images belonging to said at least one secondary content is smaller than the number of images belonging to the main content to be replaced, all the images belonging to said at least one secondary content are inserted into said modified stream and the return to said original stream is implemented when a video decoding temporal information of a video packet of the modified stream is greater than the video decoding temporal information of the last replacement video packet of the modified stream;
- if the number of images belonging to said at least one secondary content is greater than the number of images belonging to the main content to be replaced, the images belonging to said at least one secondary content are inserted into the modified stream so long as the video decoding temporal information of the replacement video packets is smaller than an estimated return video decoding temporal information.

**12.** The method of replacement according to claim 11, **characterized in that** said estimated return video decoding temporal information is determined as follows:

$$estimated\ return\ live\ video\ DTS$$
$$= PTS\ time\ (end\ insertion) + \Delta\ inserted\ video\ PTS/\ DTS$$

with:

$$\Delta\ inserted\ video\ PTS/\ DTS = inserted\ video\ PTS\ (0) - inserted\ video\ DTS\ (0)$$

*PTS time* (*end insertion*) being said return presentation temporal information,
*inserted video PTS* (0) is said video presentation temporal information of the first replacement video packet, and
*inserted video DTS* (0) is said video decoding temporal information of the first replacement video packet.

13. The method of replacement according to any one of the claims 1 to 12, **characterized in that**:

- if the number of audio or subtitle frames belonging to said at least one secondary content is smaller than the number of audio or subtitle frames belonging to the main content to be replaced, then all the audio or subtitles frames belonging to said at least one secondary content are inserted into said modified stream and the return to said original stream is implemented when an audio or subtitle presentation temporal information of said modified stream is greater than the audio or subtitle presentation temporal information of the last replacement audio packet or subtitle packet of said modified stream;
- if the number of audio or subtitle frames belonging to said at least one secondary content is greater than the number of audio or subtitle frames belonging to the main content to be replaced, then the audio or subtitle frames belonging to said at least one secondary content are inserted into the modified stream so long as the audio or subtitle presentation temporal information of the replacement audio or subtitle packets is smaller than an estimated return audio or subtitle presentation temporal information.

14. The method of replacement according to any one of the claim 7 to 10, **characterized in that**, after the last replacement video packet of said modified stream and before said instant of video return, if a packet carrying a reference clock is detected, then said packet carrying a reference clock is modified to preserve only an adaptation field of said reference clock in said modified stream.

15. The method of replacement according to any one of the claims 1 to 14, **characterized in that** it comprises a step of inserting at least one stuffing packet into the modified stream if the number of video packets, and audio or subtitle packets respectively, belonging to said at least one secondary content, is smaller to the number of video packets, and audio or subtitle packets respectively, belonging to the main content to be replaced.

16. A device for replacing a main content by at least one secondary content,
said main content being carried by a transport stream, issued from a fixed transmitter and addressed to a plurality of broadcasting sites, called an original stream,
**characterized in that** said device is associated with at least one of said broadcasting sites and comprises:

- a module for receiving the original stream,
- a module (74) for determining an instant of video breaking and at least one instant of audio or subtitle breaking, from at least one breaking packet of said original stream,
- a module (75) for determining a ratio between the bit rate of said original stream and the video bit rate of said secondary content, called a video ratio,
- a module (76) for determining a ratio between the bit rate of said original stream and the audio bit rate of said secondary content, called an audio ratio and/or a ratio between the bit rate of said original stream and the bit rate of the subtitle of said secondary content, called a subtitle ratio,
- a module (77) for the replacement, in said original stream:

∘ of at least one video packet of said main content, called a video packet to be replaced, by at least one video packet of said secondary content or by a null packet, called a replacement video packet, activated from said instant of video breaking, and
◦ at least one audio packet or subtitle packet of said main content, called an audio packet or subtitle packet to be replaced, by at least one audio packet or subtitle packet of said secondary content or by a null packet, called a replacement audio packet or subtitle packet, activated from said at least one instant of audio or subtitle breaking,

delivering a modified stream that is identical to the original stream in terms of structure and number of packets, but has its contents modified,
said replacement module comprising:

for the replacement of at least one video packet to be replaced of said main content, operating a first counter representing a number of packets between two replacement video packets of the secondary content, at a null value, and a first variable representing a number of packets before the next video packet to be replaced at the value of a cumulative variable of video ratio, defined from said video ratio,
for the replacement of at least one audio packet or subtitle packet to be replaced of said main content, operating a second counter representing a number of packets between two replacement audio packets or subtitle packets of the secondary content at a null value, and a second variable representing a number of packets before the next audio packet or subtitle packet to be replaced at the value of a cumulative variable of audio or subtitle ratio, defined from said audio or subtitle ratio,

- a module for the updating (78) in said modified stream:

◦ a reference clock,
◦ a continuity counter for counting video packets and at least one video reconstruction temporal information in said replacement video packet or packets, and
◦ a continuity counter of audio or subtitle packets and at least one audio or subtitle reconstruction temporal information in said replacement audio or subtitle packet or packets, taking account of said at least one video reconstruction temporal information.

17. Computer program comprising instructions to implement a method of replacement of contents according to claim 1, when this program can be executed by a processor.

11 — Tx —→ 13 —→ Rx1 — 121

Rx2 — 122

Rx3 — 123

<u>Fig. 1</u>

Instants de décrochage — 21

↓

Remplacement de paquets — 22

↓

MAJ — 23

↓

<u>Fig. 2</u>

Région 1

32

31

Tx

E1

321

322

323

33

E2

331

332

333

Région N

Fig. 3

42

41

Tx

E1

421

E2

431

Région 1

43

44

E3

441

45

E4

451

Région N

Fig. 4

Fig. 5A

PTS décrochage = 19340,808s

cc = 15
PTS = 19340,827s
PTS >= PTS décrochage

51

Pid Nul | Pid Vidéo | Pid Audio | Pid Vidéo | ... | Pid Nul | Pid Décrochage | ... | Pid Nul | Pid Vidéo | Pid Vidéo | Pid Audio | ... | Pid Vidéo | Pid Nul | Pid Nul | Pid Nul | Pid Vidéo | Pid Audio | ... | Pid Audio | ... | Pid Audio

53A
54A
52

cc = 2
PTS = 19300,688s
DTS = 19300,488s
PCR = 19300,019s

cc = 7
PTS = 19340,788s
DTS = 19340,768s

cc = 8
PTS = 19340,808s
DTS = 19340,788s
PTS = PTS décrochage
PCR = 19340,280s

cc = 14
PTS = 19340,805s
PTS < PTS décrochage

cc = 0
PTS = 19340,851s

Fig. 5B

cc = 8 + 1 = 9

cc = 9 + 1 = 10
PCR(1) = PCR(0) + 4 * pas pcr

cc = 14 + 1 = 15
PTS audio inséré(0) = 19340,827s

56
53B
57
54B

Pid Nul | Pid Vidéo | Pid Audio | Pid Vidéo | ... | Pid Nul | Pid Décrochage | ... | Pid Nul | Pid Vidéo | Pid Vidéo | Pid Audio | ... | Pid Vidéo | Pid Nul | Pid Nul | Pid Vidéo | Pid Vidéo | Pid Audio | ... | Pid Audio | ... | Pid Audio

51
52
55B

cc = 7

cc = 7+1 = 8
PTS vidéo inséré(0) = DTS vidéo inséré(0) + PTS vidéo pub (0) – DTS video pub (0)
DTS vidéo inséré(0) = 19340,788s
PCR(0) = 19340, 280s

cc = 14

cc = (15 + 1) modulo 16 = 0
PTS audio inséré(1) = PTS audio inséré(0) + PTS audio pub(1) – PTS audio pub (0)

EP 3 284 260 B1

PTS retour = 19460,808s

cc = 13
pas de données

cc = 15
PTS = 19460,817s
PTS >= PTS retour + PTS audio
inséré(0) − PTS vidéo inséré(0)

59

| Pid Nul | Pid Vidéo | Pid Audio | Pid Retour | ... | Pid Nul | PCR padding | Pid Nul | Pid Vidéo stuffing | Pid Audio | Pid Vidéo | Pid Nul | Pid Nul | Pid Nul | Pid Vidéo | Pid Audio | ... | Pid Audio stuffing | ... | Pid Audio |

61c

58

cc = 12
Champ d'adaptation

62c

cc = 14
PTS = DTS = 19460,808s
PTS = PTS retour
PCR = 19460,340s

cc = 14
pas de données

63c

60

## Fig. 5c

75 — Détermination ratio vidéo

Détermination ratio audio et/ou ratio de sous-titre — 76

77

Remplacement de paquets

Instants de décrochage

MAJ

74

Flux d'origine → μP → Flux modifié

78

72

M

Pg

71

73

## Fig. 6

**EP 3 284 260 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2010014594 A1